# EUROPÄISCHE PATENTSCHRIFT

(11) **EP 3 627 602 B1**
(45) Veröffentlichungstag und Bekanntmachung des Hinweises auf die Patenterteilung: **14.04.2021**
(21) Anmeldenummer: 19193519.6
(22) Anmeldetag: 26.08.2019
(51) Int. Cl.: H01M 8/04007, H01M 8/04119, H01M 8/04223

(54) **BRENNSTOFFZELLENSTAPEL UND VERFAHREN ZU SEINEM BETRIEB**
FUEL CELL STACK AND METHOD FOR OPERATING THE SAME
EMPILEMENT DE PILES À COMBUSTIBLE ET SON PROCÉDÉ DE FONCTIONNEMENT

(30) Priorität: 19.09.2018 DE 102018215892
(43) Veröffentlichungstag der Anmeldung: 25.03.2020
(73) Patentinhaber: Ford Global Technologies, LLC, Dearborn, MI 48126 (US)
(72) Erfinder: Sponheimer, Arnulf, 70806 Kornwestheim (DE); Strahl, Stephan, 92439 Bodenwöhr (DE); Orozco Santos Coy, Julio, 52078 Aachen (DE); Löffler, Rolf Lorenz, 41569 Rommerskirchen (DE)
(74) Vertreter: Dörfler, Thomas

(56) Entgegenhaltungen:
- WO-A1-2015/049533
- GB-A- 2 469 522

## Beschreibung

Die vorliegende Erfindung betrifft einen Brennstoffzellenstapel, der mehrere gestapelte Einzelzellen mit jeweils einer Anode und einer Kathode, einen gemeinsamen Brennstoffeintrittskanal und einen gemeinsamen Brennstoffaustrittskanal sowie einen gemeinsamen Oxidationsmitteleintrittskanal und einen gemeinsamen Oxidationsmittelaustrittskanal aufweist. Den Anoden der Einzelzellen ist jeweils aus dem gemeinsamen Brennstoffeintrittskanal Brennstoff zuführbar und aus diesen in den gemeinsamen Brennstoffaustrittskanal abführbar. Den Kathoden der Einzelzellen ist jeweils aus dem gemeinsamen Oxidationsmitteleintrittskanal Oxidationsmittel zuführbar und aus diesen in den gemeinsamen Oxidationsmittelaustrittskanal abführbar.

Die vorliegende Erfindung betrifft ebenso ein Verfahren zum Betreiben eines derartigen Brennstoffzellenstapels.

Brennstoffzellen, zum Beispiel Protonenaustauschmembran-Brennstoffzellen (PEMFC), konvertieren Reaktanden, nämlich einen Brennstoff (wie etwa Wasserstoff) und ein Oxidationsmittel (wie etwa Sauerstoff, z. B. Luftsauerstoff), um elektrische Energie zu erzeugen und diese einem elektrischen Verbraucher bereitzustellen. PEMFCs verwenden im Allgemeinen eine protonenleitfähige Polymer-Elektrolyt-Membran zwischen zwei Elektroden, nämlich einer Kathode und einer Anode. Eine Anordnung, welche eine protonenleitfähige Polymermembran beinhaltet, die zwischen den beiden Elektroden angeordnet ist, wird auch als Membran-Elektroden-Anordnung (MEA) bezeichnet. In einer typischen Brennstoffzelle sind auf jeder Seite einer MEA Strömungsfeldplatten vorgesehen, welche Verteilungskanäle für die Reaktanden aufweisen, um den Brennstoff und das Oxidationsmittel auf die jeweiligen Elektroden zu verteilen und um Nebenprodukte der elektrochemischen Reaktionen zu entfernen, welche innerhalb der Brennstoffzelle stattfinden. Wasser ist das hauptsächliche Nebenprodukt in einer Zelle, welche mit Wasserstoff und Luft als Reaktanden betrieben wird. Da die abgegebene Spannung einer einzelnen Zelle niedrig ist (in der Größenordnung von 1 V), ist üblicherweise eine Mehrzahl von Zellen für kommerzielle Anwendungen in Reihe zusammengestapelt. Brennstoffzellenstapel können des Weiteren in Gruppen von miteinander verbundenen Stapeln für die Nutzung in automobilen Anwendungen und dergleichen in Reihe und/oder parallelgeschaltet sein.

In bestimmten Anwendungen können PEMFC-Stapel wiederholten Zyklen eines An-Aus-Betriebs ausgesetzt sein, welche eine Lagerung über unterschiedliche Zeitspannen hinweg und bei unterschiedlichen Temperaturen beinhalten. Es ist im Allgemeinen wünschenswert, solche Stapel verlässlich und in einer kurzen Zeitspanne starten zu können. Bestimmte Anwendungen, beispielsweise automobile Anwendungen, können ein vergleichsweise rasches und verlässliches Starten ausgehend von Lagerbedingungen deutlich unterhalb des Gefrierpunkts erforderlich machen. Dies stellt eine beträchtliche Herausforderung dar und zwar sowohl wegen der relativ geringen Leistungsfähigkeit im Hinblick auf die Umsatzraten der Zellen bei solchen Temperaturen und auch wegen der Probleme, welche mit dem Wasserhaushalt in den Zellen zusammenhängen, wenn diese unter 0 °C betrieben werden. Eine gewisse Menge an Wasser ist für den ordnungsgemäßen Betrieb der Brennstoffzelle stets erforderlich (beispielsweise zur Befeuchtung der Elektrolytmembranen). Wasser wird somit einerseits als Ergebnis der Bereitstellung von elektrischer Energie erzeugt (Produktwasser) und kann andererseits aufgrund einer gewollten Befeuchtung der Reaktanden oder auch aufgrund von in Luft (Oxidationsmittel) enthaltenem Wasserdampf in die Brennstoffzelle gelangen und sich dort sammeln. Selbstverständlich bildet sich jedoch Eis, wenn flüssiges Wasser bei entsprechenden Temperaturen nahe oder unterhalb des Wassergefrierpunkts vorhanden ist. Das Vorhandensein von Eis in der Zelle, zum Beispiel in den Kanälen der anoden- und kathodenseitigen Strömungsfeldplatten, kann problematisch sein, je nachdem wie viel davon bei der Lagerung oder beim Starten vorhanden ist.

Gefrorene Wassertropfen können zum Beispiel Kanäle in den anoden- und/oder kathodenseitigen Strömungsfeldplatten blockieren bzw. verstopfen, was eine wenigstens teilweise Unterbrechung der Fluidströmung an der Anode bzw. Kathode zur Folge hat und so die aktive Reaktionsfläche reduziert und zu einem Leistungsrückgang der Brennstoffzelle führt. Wird der Brennstoffzelle in einem solchen Fall weiterhin elektrische Leistung durch einen angeschlossenen elektrischen Verbraucher entnommen, bricht die Zellenspannung ein und kann sogar negative Werte erreichen (einhergehend mit einer einsetzenden Elektrolyse), was in der Folge den Katalysator schädigen bzw. zerstören kann. Folglich kann die Brennstoffzelle bzw. der gesamte Brennstoffzellenstapel ausfallen und muss gegen einen neuen getauscht werden.

WO2015/049533 offenbart, eine Hochtemperaturbrennstoffzelle in einer Kammer anzuordnen, die mit Mikrowellenstrahlung beaufschlagt wird, um die Brennstoffzelle schneller auf Betriebstemperatur zu bringen.

Vor diesem Hintergrund liegt der vorliegenden Erfindung die Aufgabe zugrunde, einen verbesserten Brennstoffzellenstapel sowie ein verbessertes Verfahren zum Betreiben eines Brennstoffzellenstapels bereitzustellen, die einen zuverlässigen, sicheren, leistungskonstanten und langlebigen Betrieb des Stapels unter allen zu erwartenden Betriebsbedingungen, insbesondere bei einer Verwendung in einem Kraftfahrzeug, gewährleisten. Hierbei sollen der Brennstoffzellenstapel sowie das Verfahren unter anderem insbesondere einen schnellen Start bzw. eine schnelle Inbetriebnahme ermöglichen, auch bei Betriebsbedingungen nahe oder unterhalb des Gefrierpunkts von Wasser (hierin nachstehend auch als Gefrierstart bezeichnet). Zudem soll der Brennstoffzellenstapel einfach in seinem Aufbau und kostengünstig herzustellen sein.

Diese Aufgabe wird durch einen Brennstoffzellenstapel mit den Merkmalen des Anspruchs 1 sowie durch ein Verfahren zum Betreiben eines Brennstoffzellenstapels mit den Merkmalen des Anspruchs 9 gelöst. Weitere, besonders vorteilhafte Ausgestaltungen der Erfindung offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Es sei ferner angemerkt, dass eine hierin nachstehend verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Erfindungsgemäß weist ein Brennstoffzellenstapel mehrere gestapelte Einzelzellen mit jeweils einer Anode und einer Kathode, einen gemeinsamen Brennstoffeintrittskanal und einen gemeinsamen Brennstoffaustrittskanal sowie einen gemeinsamen Oxidationsmitteleintrittskanal und einen gemeinsamen Oxidationsmittelaustrittskanal auf. Unter "gemeinsamem" Eintritts- und Austrittskanal ist ein wenigstens einem Teil der gestapelten Einzelzellen gemeinsam zur Verfügung stehender einzelner Kanal zu verstehen, an den dieser gestapelte Teil der Einzelzellen gemeinsam in fluidleitender Verbindung angeschlossen sind. Dementsprechend ist den Anoden der Einzelzellen jeweils aus dem gemeinsamen Brennstoffeintrittskanal Brennstoff, zum Beispiel Wasserstoff, zuführbar, zum Beispiel über ein von einer anodenseitigen Strömungsfeldplatte gebildetes Strömungsfeld, und aus den Einzelzellen wieder in den gemeinsamen Brennstoffaustrittskanal abführbar. Weiterhin ist gemäß der Erfindung auch den Kathoden der Einzelzellen jeweils aus dem gemeinsamen Oxidationsmitteleintrittskanal Oxidationsmittel, zum Beispiel Sauerstoff bzw. Luftsauerstoff, zuführbar, zum Beispiel über ein von einer kathodenseitigen Strömungsfeldplatte gebildetes Strömungsfeld, und aus den Einzelzellen wieder in den gemeinsamen Oxidationsmittelaustrittskanal abführbar. Die vorliegende Erfindung sieht ferner wenigstens eine Mikrowellenquelle, zum Beispiel in Form eines an sich bekannten Magnetrons, zur wahlweisen Erzeugung von Mikrowellenstrahlung vor, wobei die Mikrowellenquelle angeordnet und eingerichtet ist, die erzeugte Mikrowellenstrahlung in den gemeinsamen Brennstoffaustrittskanal und/oder den gemeinsamen Oxidationsmittelaustrittskanal derart abzustrahlen, dass dort vorhandenes gefrorenes Wasser geschmolzen und/oder flüssiges Wasser verdampft wird.

Der grundsätzliche Aufbau einer Brennstoffzelle, zum Beispiel einer Protonenaustauschmembran-Brennstoffzelle (PEMFC), die Verteilungskanäle aufweisende Strömungsfeldplatten (auch so genannte gemeinsame Bipolarplatten benachbarter Einzelzellen innerhalb des Stapels) zum Zuführen und Verteilen der Reaktanden an die Anode (Brennstoff) bzw. Kathode (Oxidationsmittel), eine zwischen Anode und Kathode eingefügte protonenleitfähige Polymer-Elektrolyt-Membran einschließlich eines Katalysators, einen elektrischen Anschluss eines elektrischen Verbrauchers an den Brennstoffzellenstapel zur Entnahme elektrischer Energie bzw. Leistung aus diesem und dergleichen aufweist, ist allgemein bekannt, so dass auf eine weitergehende, detaillierte Erläuterung der Brennstoffzelle hierin verzichtet werden kann.

Es wurde festgestellt, dass sich unter bestimmten Umständen während des Startens einer Brennstoffzelle unterhalb des Gefrierpunkts von Wasser in den an der Anode und/oder an der Kathode anliegenden Strömungsfeldplatten, insbesondere von PEMFCs, Eis nahe dem Auftaupunkt oder Schmelzpunkt von Wasser bilden kann. Eis kann sich hierbei insbesondere in der Nähe der Übergänge von den anodenseitigen und/oder kathodenseitigen Strömungsfeldplatten in den gemeinsamen Brennstoffaustrittskanal bzw. den gemeinsamen Oxidationsmittelaustrittskanal bilden. Die erfindungsgemäß in den Brennstoffaustrittskanal und/oder Oxidationsmittelaustrittskanal abgestrahlte Mikrowellenstrahlung kann somit unter anderem genau in diesen Übergangsbereichen wenigstens gefrorenes Wasser schmelzen, so dass bei einem Gefrierstart, insbesondere bei einem Start in einem Temperaturbereich zwischen beispielsweise -5 °C und etwa +5 °C oder auch in einem Temperaturbereich deutlich unterhalb von 0 °C, eine Beeinträchtigung bzw. Unterbrechung der Brennstoff-und/oder Oxidationsmittelströmung entlang der Anoden bzw. Kathoden der einzelnen Brennstoffzellen sicher vermieden wird. Der Brennstoffzellenstapel erreicht somit unmittelbar nach dem Gefrierstart im Wesentlichen seine volle elektrische Leistungsfähigkeit. Ebenso werden eine Spannungsumkehr in einer Einzelzelle und eine damit einhergehende Zerstörung des Katalysators sicher verhindert. Günstigere Katalysatoren, die nicht speziell gegen eine potentielle Zellenspannungsumkehr ausgelegt sein müssen, können nun eingesetzt werden. Auch können die Strömungskanäle der Strömungsfeldplatten nun einfacher ausgelegt werden, da eine gleichmäßige und großflächige Anströmung der an der jeweiligen Strömungsfeldplatte anliegenden Anode bzw. Kathode nicht mehr durch eventuell blockierte Strömungskanäle negativ beeinträchtigt werden kann. Insgesamt verringern sich hierdurch nicht zuletzt auch die Herstellungskosten für einen erfindungsgemäßen Brennstoffzellenstapel.

Die Erwärmung der gefrorenen und/oder flüssigen Wassermoleküle, die Hertzsche Dipole sind, mittels der durch die Mikrowellenquelle erzeugten Mikrowellenstrahlung erweist sich außerdem als besonders effektiv, so dass zur Beseitigung des gefrorenen Wassers nur ein geringer Energieaufwand erforderlich ist. Im Gegensatz hierzu würde beispielsweise eine thermische Erwärmung des gesamten Brennstoffzellenstapels mittels einer entsprechend geeigneten Heizvorrichtung einen wesentlich höheren Energieaufwand erfordern.

Vorzugsweise sind die den erfindungsgemäßen Brennstoffzellenstapel bildenden Einzelzellen Protonenaustauschmembran-Brennstoffzellen (PEMFC), der Brennstoff Wasserstoff und das Oxidationsmittel Sauerstoff, der bevorzugt der Umgebungsluft entnommen wird. Die vorliegende Erfindung ist jedoch nicht hierauf beschränkt.

Besonders bevorzugt wird die Mikrowellenstrahlung wenigstens in den Brennstoffaustrittskanal gestrahlt, da überraschend festgestellt wurde, dass dieser hinsichtlich einer Eisbildung von dort vorhandenem Wasser besonders kritisch ist. Zwar fällt auch an der Kathode durch die dort stattfindende chemische Reduktion Produktwasser an, jedoch wird insbesondere auch der Brennstoff (z. B. Wasserstoff) in allgemein bekannter Weise zur Erzielung einer maximalen (optimalen) Brennstoffzellenleistung vorzugsweise auf bis zu 100 % relative Feuchte zur Befeuchtung der Membran befeuchtet.

Die vorliegende Erfindung ist nicht auf die lediglich in den Brennstoffaustrittskanal eingestrahlte Mikrowellenstrahlung begrenzt, sie kann auch lediglich eine Einstrahlung von Mikrowellenstrahlung in den Oxidationsmittelaustrittskanal oder auch in beide Austrittskanäle vorsehen.

Gemäß einer vorteilhaften Ausgestaltung der Erfindung sind mehrere Brennstoffaustrittsbohrungen in dem gemeinsamen Brennstoffaustrittskanal vorgesehen, über welche der Brennstoff von den Anoden der Einzelzellen in den gemeinsamen Brennstoffaustrittskanal abführbar ist, und/oder sind mehrere Oxidationsmittelaustrittsbohrungen in dem gemeinsamen Oxidationsmittelaustrittskanal vorgesehen, über welche das Oxidationsmittel von den Kathoden der Einzelzellen in den gemeinsamen Oxidationsmittelaustrittskanal abführbar ist, wobei die Mikrowellenstrahlung derart in den gemeinsamen Brennstoffaustrittskanal und/oder den gemeinsamen Oxidationsmittelaustrittskanal abgestrahlt ist, dass sie die Brennstoffaustrittsbohrungen und/oder die Oxidationsmittelaustrittsbohrungen erreicht bzw. trifft.

Da festgestellt wurde, dass sich insbesondere an den Brennstoffaustrittsbohrungen und/oder den Oxidationsmittelaustrittsbohrungen in die jeweiligen Austrittskanäle infolge einer relativ hohen Kapillarwirkung dieser, in der Regel mit einem vergleichsweise kleinen Durchmesser ausgebildeten Austrittsbohrungen Eis bildet, erweist sich die Mikrowellenbestrahlung dieser Austrittsbohrungen als besonders effektiv. Es wurde ferner festgestellt, dass die Mikrowellenstrahlung hierbei bis zu einem gewissen Grad auch in die jeweiligen Austrittsbohrungen eindringt, so dass wenigstens ein Verflüssigen von gefrorenem Wasser auch innerhalb der Austrittsbohrungen effektiv erzielt wird.

Nach einer weiteren vorteilhaften Ausgestaltung der Erfindung ist ein Wellenleiter vorgesehen, über welchen die Mikrowellenquelle die Mikrowellenstrahlung in den gemeinsamen Brennstoffaustrittskanal und/oder den gemeinsamen Oxidationsmittelaustrittskanal abstrahlt. Hierdurch lässt sich die Mikrowellenstrahlung noch effektiver zur Erwärmung, das heißt zum Verflüssigen und/oder Verdampfen, des in den jeweiligen Austrittskanälen vorhandenen Wassers einsetzen.

Eine noch weitere vorteilhafte Ausgestaltung der Erfindung sieht vor, dass der Wellenleiter rohrförmig ausgebildet ist und sich wenigstens in einen Teil des Brennstoffaustrittskanals und/oder des Oxidationsmittelaustrittskanals hinein erstreckt. Hierbei erstreckt sich der Wellenleiter vorzugsweise wenigstens bis zur Hälfte der Längserstreckung des jeweiligen Austrittskanals oder auch noch darüber hinaus, zum Beispiel wenigstens etwa bis zu 3/4 oder etwa 4/5, in den Brennstoffaustrittskanal und/oder den Oxidationsmittelaustrittskanal hinein. Eine Umfangswand (Rohrwandung) des Wellenleiters weist wenigstens eine Öffnung auf, durch die eine ortsspezifische, konzentrierte Abstrahlung der Mikrowellenstrahlung in den Brennstoffaustrittskanal und/oder den Oxidationsmittelaustrittskanal bewirkt wird. Besonders vorteilhaft erweist sich eine solche Ausgestaltung des Wellenleiters beispielsweise in Kombination mit den durch diesen gezielt angestrahlten Brennstoffaustrittsbohrungen im Brennstoffaustrittskanal bzw. Oxidationsmittelaustrittsbohrungen im Oxidationsmittelaustrittskanal. Der Querschnitt des rohrförmigen Wellenleiters kann eckig, z. B. polygonal, rechteckig, quadratisch etc., rund, z. B. kreisrund, elliptisch etc., und dergleichen ausgebildet sein.

Gemäß einer weiteren vorteilhaften Ausgestaltung der Erfindung ist die wenigstens eine Mikrowellenquelle an einer die mehreren gestapelten Einzelzellen an einem freien Stapelende abschließenden Endplatte angebracht und gehalten.

Die Endplatte kann neben einer Aufnahmebohrung und/oder Halterung für die Mikrowellenquelle keine weiteren zum freien Stapelende des Brennstoffzellenstapels führenden Öffnungen aufweisen. Sie kann den Brennstoffzellenstapel somit endseitig vollständig (gasdicht) abschließen.

Nach einer noch weiteren vorteilhaften Ausgestaltung kann die Endplatte eine dem Brennstoffaustrittskanal zugeordnete Wasserabflussbohrung mit an dieser fluidleitend angeschlossenem Wasserauffangbehälter aufweisen, wobei die Mikrowellenstrahlung derart in den Brennstoffaustrittskanal abgestrahlt ist, dass sie die Wasserabflussbohrung und/oder den Wasserauffangbehälter erreicht bzw. trifft. Die Wasserabflussbohrung dient dem Abfließen, das heißt Entfernen (auch als "Purging" bezeichnet), von im Brennstoffaustrittskanal angesammeltem Wasser in den Wasserauffangbehälter, aus dem es in vorherbestimmten Zeitabständen über eine entsprechende Drainageventilanordnung abgelassen werden kann. Das Bestrahlen der Wasserabflussbohrung mit der Mikrowellenstrahlung verhindert ebenso wirkungsvoll ein Blockieren dieser durch gefrorenes Wasser. Ebenso kann im Wasserauffangbehälter gefrorenes Wasser zum Beispiel nach einem Gefrierstart rasch aufgetaut und entsprechend zügig abgelassen werden.

Die Endplatte kann weiterhin eine dem Brennstoffeintrittskanal zugeordnete Brennstoffeintrittsöffnung, eine dem Brennstoffaustrittskanal zugeordnete Brennstoffaustrittsöffnung, eine dem Oxidationsmitteleintrittskanal zugeordnete Oxidationsmitteleintrittsöffnung sowie eine dem Oxidationsmittelaustrittskanal zugeordnete Oxidationsmittelaustrittsöffnung aufweisen. Dies ist jedoch nicht zwingend erforderlich. Eine die vorgenannten Öffnungen aufweisende Endplatte kann auch als (endseitige) Strömungsfeldplatte oder Medienverteilplatte (Media Distribution Plate, MDP) bezeichnet werden. Die Öffnungen sind hierbei jeweils vorgesehen, den entsprechenden Kanälen die jeweiligen Reaktanden zu- bzw. aufzuführen.

Gemäß einer weiteren vorteilhaften Ausgestaltung der Erfindung ist eine erste Mikrowellenquelle zur Erzeugung und Abstrahlung von Mikrowellenstrahlung in den gemeinsamen Brennstoffaustrittskanal vorgesehen sowie eine zweite Mikrowellenquelle zur Erzeugung und Abstrahlung von Mikrowellenstrahlung in den gemeinsamen Oxidationsmittelaustrittskanal.

Nach einer noch weiteren, alternativen Ausgestaltung der Erfindung ist lediglich eine einzige Mikrowellenquelle zur Erzeugung und Abstrahlung von Mikrowellenstrahlung sowohl in den gemeinsamen Brennstoffaustrittskanal als auch in den gemeinsamen Oxidationsmittelaustrittskanal vorgesehen. In diesem Fall wird die von der einzigen Mikrowellenquelle erzeugte Mikrowellenstrahlung den jeweiligen Austrittskanälen über eine verzweigte Mikrowellenantenne und/oder einen verzweigten Zuführwellenleiter zugeführt.

Gemäß einem weiteren Aspekt der vorliegenden Erfindung wird ein Verfahren zum Betreiben eines Brennstoffzellenstapels bereitgestellt, wobei der Brennstoffzellenstapel mehrere gestapelte Einzelzellen mit jeweils einer Anode und einer Kathode, einen gemeinsamen Brennstoffeintrittskanal und einen gemeinsamen Brennstoffaustrittskanal sowie einen gemeinsamen Oxidationsmitteleintrittskanal und einen gemeinsamen Oxidationsmittelaustrittskanal aufweist. Den Anoden der Einzelzellen wird jeweils aus dem gemeinsamen Brennstoffeintrittskanal Brennstoff zugeführt und aus diesen wieder in den gemeinsamen Brennstoffaustrittskanal abgeführt. Den Kathoden der Einzelzellen wird jeweils aus dem gemeinsamen Oxidationsmitteleintrittskanal Oxidationsmittel zugeführt und aus diesen wieder in den gemeinsamen Oxidationsmittelaustrittskanal abgeführt. Weiterhin wird mittels wenigstens einer Mikrowellenquelle wahlweise Mikrowellenstrahlung erzeugt und diese in den gemeinsamen Brennstoffaustrittskanal und/oder den gemeinsamen Oxidationsmittelaustrittskanal derart abgestrahlt, dass dort vorhandenes gefrorenes Wasser geschmolzen und/oder flüssiges Wasser verdampft wird.

Bezüglich verfahrensbezogener Begriffsdefinitionen sowie der Wirkungen und Vorteile verfahrensgemäßer Merkmale wird auf die vorstehenden Erläuterungen sinngemäßer Definitionen, Wirkungen und Vorteile bezüglich der erfindungsgemäßen Vorrichtung verwiesen. Offenbarungen hierin bezüglich der erfindungsgemäßen Vorrichtung sollen in sinngemäßer Weise auch zur Definition des erfindungsgemäßen Verfahrens herangezogen werden können, sofern dies hierin nicht ausdrücklich ausgeschlossen ist. Ebenso sollen Offenbarungen hierin bezüglich des erfindungsgemäßen Verfahrens in sinngemäßer Weise zur Definition der erfindungsgemäßen Vorrichtung herangezogen werden können, sofern dies hierin nicht ebenfalls ausdrücklich ausgeschlossen ist. Insofern wird hierin auf eine Wiederholung von Erläuterungen sinngemäß gleicher Merkmale, deren Wirkungen und Vorteile im Hinblick auf die hierin offenbarte erfindungsgemäße Vorrichtung und das hierin offenbarte erfindungsgemäße Verfahren zugunsten einer kompakteren Beschreibung weitgehend verzichtet.

Bezüglich des erfindungsgemäßen Verfahrens sei erwähnt, dass gemäß einer besonders vorteilhaften Ausgestaltung der Erfindung die Mikrowellenstrahlung während eines Gefrierstarts des Brennstoffzellenstapels erzeugt wird. Insbesondere bei einem Gefrierstart kann die in den Oxidationsmittelaustrittskanal abgestrahlte Mikrowellenstrahlung ebenso ein Gefrieren von in dem Oxidationsmittel, zum Beispiel in kalter, feuchter Luft, enthaltenem Wasserdampf sicher verhindern.

Eine noch weitere vorteilhafte Ausgestaltung der Erfindung sieht vor, dass die Mikrowellenstrahlung während eines Brennstoffspülvorgangs der Anoden und/oder eines Oxidationsmittelspülvorgangs der Kathoden erzeugt wird. Es ist allgemein bekannt, einen derartigen Spülvorgang in gewissen Zeitabständen durchzuführen, da Wasser, welches sich an der Anode oder Kathode ansammelt bzw. festsetzt, die aktive Reaktionsfläche reduziert und somit zu einem Leistungsrückgang des Stapels führt. Hierbei kann die Mikrowellenstrahlung vorhandenes Eis schmelzen und/oder auch flüssiges Wasser verdampfen, um den Spülvorgang wesentlich zu beschleunigen und damit die Spülzeiten zu verringern.

Gemäß einer weiteren vorteilhaften Ausgestaltung der Erfindung wird die Mikrowellenstrahlung während eines Warmlaufbetriebs und/oder eines Normalbetriebs des Brennstoffzellenstapels erzeugt, um in diesem Fall insbesondere durch Verdampfen von Wasser die Befeuchtung des Brennstoffzellenstapels bzw. der Membranen zu steuern. Wie bereits erwähnt, ist die elektrische Leistungsabgabe des Brennstoffzellenstapels wesentlich von einer ausreichenden Befeuchtung der Membranen abhängig. Insbesondere während einer Warmlaufphase, in der die Reaktanden bzw. Reaktionsfluide (z. B. Wasserstoff und Sauerstoff) noch nicht ihre gewünschte rel. Feuchte aufweisen, kann das zusätzliche Verdampfen von im Brennstoffaustrittskanal und/oder im Oxidationsmittelaustrittskanal vorhandenem Wasser eine effektive, rasche Befeuchtung der Reaktanden und damit einen hinsichtlich der Leistungsabgabe optimalen Wasserhaushalt des Brennstoffzellenstapels gewährleisten. So kann beispielsweise der im Brennstoffaustrittskanal austretende, befeuchtete Brennstoff erneut dem Brennstoffeintrittskanal zugeführt werden und so eine schnelle Befeuchtung der Anoden des Stapels sicherstellen.

Gemäß einer noch weiteren vorteilhaften Ausgestaltung der Erfindung wird die Mikrowellenstrahlung während einer Abschaltung des Brennstoffzellenstapels insbesondere zum Verdampfen von Wasser im Brennstoffzellenstapel erzeugt. Auf diese Weise kann Wasser aus dem Brennstoffaustrittskanal und/oder Oxidationsmittelaustrittskanal bei einer Abschaltung des Stapels nahezu vollständig entfernt werden, so dass es bei einer anschließenden Lagerung des Brennstoffzellenstapels unterhalb des Gefrierpunkts von Wasser zu gar keiner oder lediglich zu einer deutlich reduzierten Eisbildung innerhalb der Brennstoffzellen kommen kann. Dies verbessert die Wirksamkeit eines nachfolgenden Gefrierstarts wiederum erheblich. Es versteht sich, dass das in den jeweiligen Austrittskanälen verdampfte Wasser während eines Abschaltvorgangs des Stapels aus dem Stapel in die Umgebung abgeführt wird.

Die Abgabeleistung der von der Mikrowellenquelle erzeugten Mikrowellenstrahlung kann vorteilhafterweise lediglich durch Ein- und Ausschalten der Mikrowellenquelle gemäß einem vorherbestimmten Tastverhältnis (auch als "Duty Cycle" bezeichnet) ähnlich einer PWM-Steuerung (Pulsweitenmodulation) gesteuert werden. Dies stellt eine besonders einfach zu realisierende Ausgestaltung der Mikrowellenleistungssteuerung dar. Über die Mikrowellenleistung können der Grad und die Geschwindigkeit der Wassererwärmung gesteuert werden, so dass ein Auftauen und/oder ein Verdampfen des bestrahlten Wassers gezielt erreicht werden kann.

Die Abgabeleistung der von der Mikrowellenquelle erzeugten Mikrowellenstrahlung kann alternativ auch kontinuierlich durch Beaufschlagen einer Glühkathode der Mikrowellenquelle, zum Beispiel eines Magnetrons, mit einer elektrischen Heizgleichspannung vorherbestimmbarer Höhe und/oder durch Beaufschlagen einer Anode der Mikrowellenquelle mit einer Anodenwechselspannung vorherbestimmbarer Höhe und/oder Frequenz gesteuert werden.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1: eine Draufsicht auf ein freies Stapelende eines Ausführungsbeispiels eines Brennstoffzellenstapels gemäß der Erfindung,
- Fig. 2: eine vergrößerte Teilansicht des Brennstoffzellenstapels aus Fig. 1,
- Fig. 3: eine Längsschnittteilansicht des Brennstoffzellenstapels aus Fig. 1 entlang der dort gezeigten Schnittebene A-A,
- Fig. 4: eine Längsschnittteilansicht eines weiteren Ausführungsbeispiels eines Brennstoffzellenstapels gemäß der Erfindung entlang der in Fig. 1 gezeigten Schnittebene A-A,
- Fig. 5: eine Längsschnittteilansicht eines weiteren Ausführungsbeispiels eines Brennstoffzellenstapels gemäß der Erfindung entlang der in Fig. 1 gezeigten Schnittebene A-A,
- Fig. 6: eine weitere Längsschnittteilansicht des Brennstoffzellenstapels aus Fig. 4 entlang der in Fig. 1 gezeigten Schnittebene A-A,
- Fig. 7: eine Längsschnittteilansicht eines noch weiteren Ausführungsbeispiels eines Brennstoffzellenstapels gemäß der Erfindung entlang der in Fig. 1 gezeigten Schnittebene A-A,
- Fig. 8: eine Draufsicht auf eine Endplatte des Brennstoffzellenstapels aus Fig. 7,
- Fig. 9: eine Längsschnittteilansicht eines noch weiteren Ausführungsbeispiels eines Brennstoffzellenstapels gemäß der Erfindung entlang der in Fig. 1 gezeigten Schnittebene A-A,
- Fig. 10: eine Längsschnittteilansicht eines noch weiteren Ausführungsbeispiels eines Brennstoffzellenstapels gemäß der Erfindung entlang der in Fig. 1 gezeigten Schnittebene A-A,
- Fig. 11: eine Schaltungsanordnung zur elektrischen Ansteuerung einer Mikrowellenquelle,
- Fig. 12: ein Blockdiagramm zur Veranschaulichung eines ersten Steuerungsverfahrens einer Mikrowellenquelle zur Erzeugung einer gewünschten Mikrowellenstrahlung und
- Fig. 13: ein Blockdiagramm zur Veranschaulichung eines zweiten Steuerungsverfahrens einer Mikrowellenquelle zur Erzeugung einer gewünschten Mikrowellenstrahlung.

In den unterschiedlichen Figuren sind hinsichtlich ihrer Funktion gleichwertige Teile stets mit denselben Bezugszeichen versehen, so dass diese in der Regel auch nur einmal beschrieben werden.

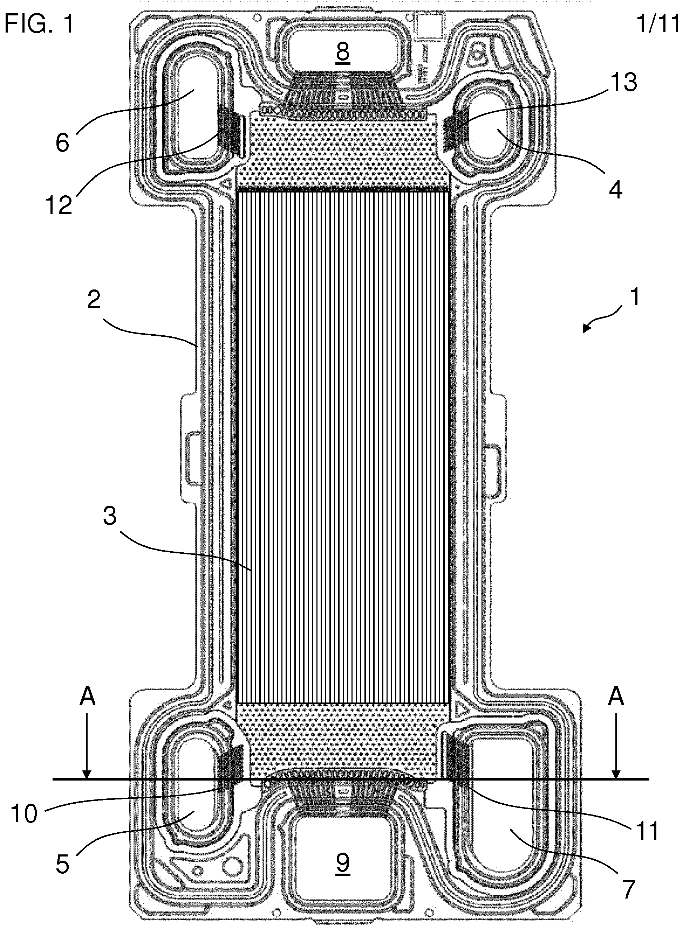

Fig. 1 zeigt eine Draufsicht auf ein freies Ende eines Ausführungsbeispiels eines Brennstoffzellenstapels 1 gemäß der Erfindung. Insbesondere ist in Fig. 1 ein freies Stapelende 2 des Brennstoffzellenstapels 1 dargestellt. In Fig. 1 sind mehrere, den Brennstoffzellenstapel 1 bildende Einzelzellen 3, die vorliegend als PEMFC-Brennstoffzellen ausgebildet sind, lediglich symbolisch dargestellt. Eine Zusammenschaltung solcher Einzelzellen 3 zur Bildung des gesamten Brennstoffzellenstapels 1 ist hinlänglich bekannt, so dass hierin nicht näher darauf eingegangen wird. Obwohl es in Fig. 1 nicht explizit dargestellt ist, weist jede Einzelzelle 3 unter anderem eine Anode und eine Kathode, sowie ein die Reaktanden an diese heranführendes Strömungsfeld auf. Des Weiteren weist der Brennstoffzellenstapel 1 einen gemeinsamen Brennstoffeintrittskanal 4 und einen gemeinsamen Brennstoffaustrittskanal 5 sowie einen gemeinsamen Oxidationsmitteleintrittskanal 6 und einen gemeinsamen Oxidationsmittelaustrittskanal 7 auf. Ferner ist Fig. 1 zu entnehmen, dass der Brennstoffzellenstapel 1 einen Kühlmitteleintrittskanal 8 und einen Kühlmittelaustrittskanal 9 aufweist.

Die Kühlmitteleintritts- und Kühlmittelaustrittskanäle 8, 9 dienen zur Durchleitung eines Kühlmittels, um den Brennstoffzellenstapel 1 während seines Betriebs in hinlänglich bekannter Weise infolge der bei der chemischen Reaktion der Reaktanden (Brennstoff, Oxidationsmittel) entstehenden Reaktionswärme innerhalb der Einzelzellen zu kühlen.

Weiterhin ist den Anoden der Einzelzellen 3 jeweils aus dem gemeinsamen Brennstoffeintrittskanal 4 Brennstoff, im vorliegenden Fall Wasserstoff, zuführbar und aus den Anoden in den gemeinsamen Brennstoffaustrittskanal 5 wieder abführbar. Den Kathoden der Einzelzellen 3 ist jeweils aus dem gemeinsamen Oxidationsmitteleintrittskanal 6 Oxidationsmittel, vorliegend Sauerstoff in Form von Luftsauerstoff, zuführbar und aus den Kathoden in den gemeinsamen Oxidationsmittelaustrittskanal 7 wieder abführbar.

Wie in Fig. 1 schematisch dargestellt ist, sind mehrere Brennstoffaustrittsbohrungen 10 in dem gemeinsamen Brennstoffaustrittskanal 5 vorgesehen, über welche der Brennstoff von den Anoden der Einzelzellen 3 in den gemeinsamen Brennstoffaustrittskanal 5 abführbar ist. Ferner sind mehrere Oxidationsmittelaustrittsbohrungen 11 in dem gemeinsamen Oxidationsmittelaustrittskanal 7 vorgesehen, über welche das Oxidationsmittel von den Kathoden der Einzelzellen 3 in den gemeinsamen Oxidationsmittelaustrittskanal 7 abführbar ist.

Ähnliche Eintrittsbohrungen 12 und 13 für den Brennstoff (Brennstoffeintrittsbohrungen 12) bzw. für das Oxidationsmittel (Oxidationsmitteleintrittsbohrungen 13) können auch in dem Brennstoffeintrittskanal 4 bzw. Oxidationsmitteleintrittskanal 6 vorhanden sein, um den Anoden der Einzelzellen 3 den Brennstoff aus dem Brennstoffeintrittskanal 4 bzw. den Kathoden der Einzelzellen 3 das Oxidationsmittel aus dem Oxidationsmitteleintrittskanal 6 zuzuführen.

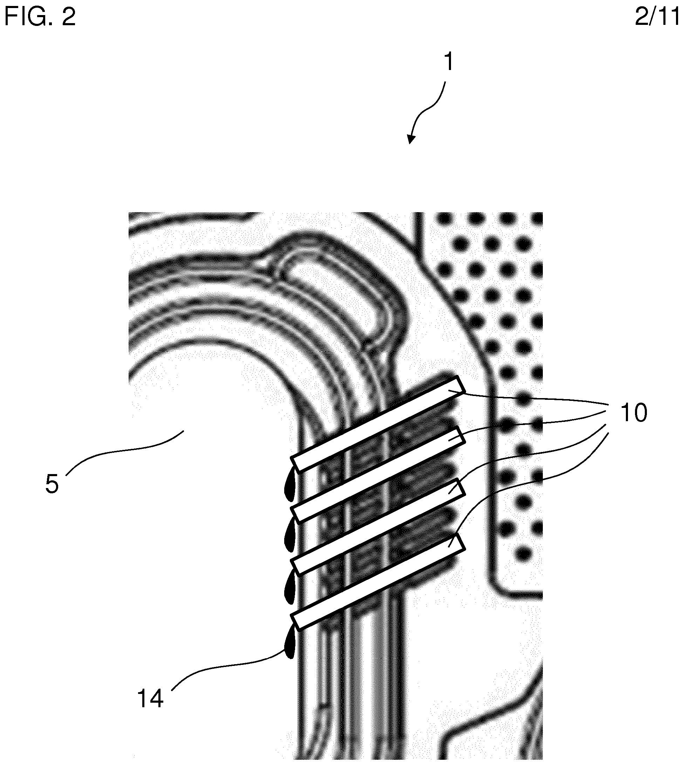

Fig. 2 stellt eine vergrößerte Teilansicht des Brennstoffzellenstapels 1 aus Fig. 1 dar. Insbesondere stellt Fig. 2 den Bereich des in Fig. 1 gezeigten Brennstoffaustrittskanals 5 dar, in dem die Brennstoffaustrittsbohrungen 10 angeordnet sind. In Fig. 2 sind einige dieser Austrittsbohrungen 10 vergrößert dargestellt. Weiterhin sind in Fig. 2 Wassertropfen 14 dargestellt, um zu verdeutlichen, dass Wasser, zum Beispiel Produktwasser oder sich aus dem jeweiligen befeuchteten Reaktanden niederschlagendes, kondensierendes Wasser 14, insbesondere an bzw. in den Brennstoffaustrittsbohrungen 10, die einen verhältnismäßig kleinen Durchmesser aufweisen und infolgedessen eine starke Kapillarwirkung aufweisen, verbleiben können. Insbesondere können die Wassertropfen 14 an den Brennstoffaustrittsbohrungen 10 bei Umgebungstemperaturen des Brennstoffzellenstapels 1 unterhalb des Gefrierpunkts von Wasser gefrieren und dann als gefrorene Wassertropfen 14 in oder an den jeweiligen Brennstoffaustrittsbohrung 10 verbleiben, die infolgedessen blockiert bzw. verstopft ist.

Es ist zu verstehen, dass die hierin dargelegten Erläuterungen, die sich lediglich auf die Brennstoffaustrittsbohrungen 10 beziehen, in sinngemäßer Weise ebenso für die Oxidationsmittelausgangsbohrungen 11 gelten, sofern dies hierin nicht ausdrücklich ausgeschlossen ist. Selbiges gilt ebenso für Erläuterungen bezüglich lediglich eines der beiden Austrittskanäle 5 (Brennstoff) und 7 (Oxidationsmittel) für den jeweils anderen Austrittskanal, sofern dies hierin nicht ausdrücklich ausgeschlossen ist.

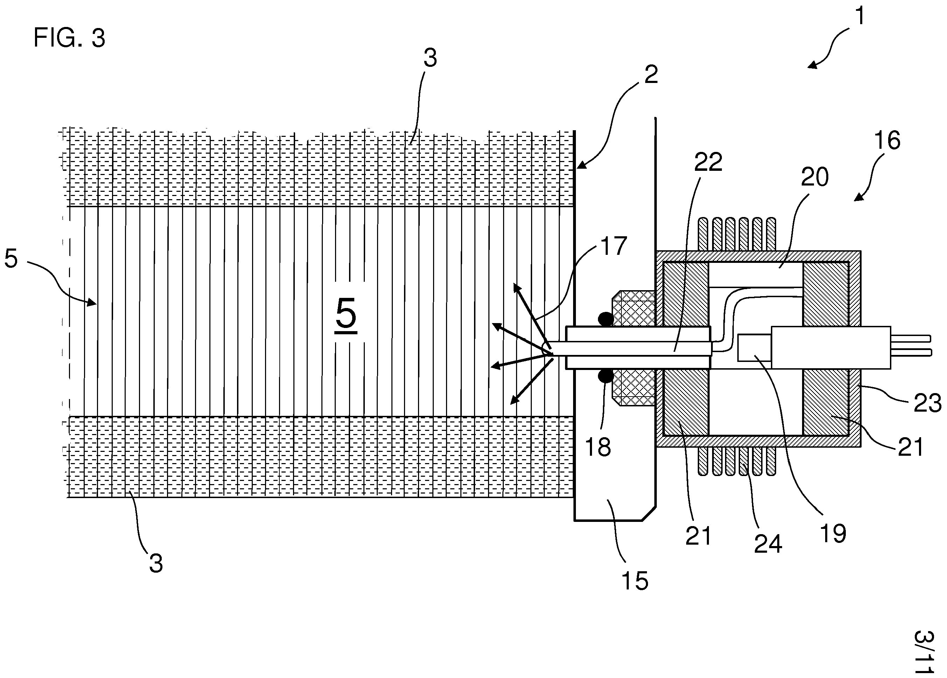

Fig. 3 stellt schematisch eine Längsschnittteilansicht des Brennstoffzellenstapels 1 aus Fig. 1 entlang der dort gezeigten Schnittebene A-A dar. In dem in Fig. 3 dargestellten Zustand des Brennstoffzellenstapels 1 ist das freie Stapelende 2 mit einer Endplatte 15 gasdicht verschlossen. An dieser Endplatte 15 ist eine Mikrowellenquelle 16 angebracht, die von der Endplatte 15 gehalten ist. Die Mikrowellenquelle 16, vorliegend als an sich bekanntes Magnetron ausgeführt, erzeugt wahlweise, das heißt entsprechend einer durch eine nicht dargestellte Steuereinrichtung bewirkte Aktivierung und Deaktivierung des Magnetrons 16, eine Mikrowellenstrahlung 17. Bei dem dargestellten Ausführungsbeispiel des Brennstoffzellenstapels 1 wird die von der Mikrowellenquelle 16 erzeugte Mikrowellenstrahlung 17 in den gemeinsamen Brennstoffaustrittskanal 5 abgestrahlt. Der Brennstoffaustrittskanal 5 ist in Fig. 3 als nicht schraffierter, zentraler Bereich des Brennstoffzellenstapels 1 dargestellt.

Wie Fig. 3 weiter zu entnehmen ist, weist die Endplatte 15 bis auf die Aufnahme für die Mikrowellenquelle 16 im Wesentlichen keinerlei weitere zum freien Stapelende 2 reichende Öffnungen auf. Das Stapelende 2 wird durch die Endplatte 15 vollständig (fluiddicht) abgeschlossen. Dementsprechend ist auch die Mikrowellenquelle 16 gasdicht mittels eines entsprechenden Dichtungsrings 18 in die Endplatte 15 aufgenommen.

Der grundsätzliche Aufbau und die Funktionsweise der vorliegend als Magnetron ausgebildeten Mikrowellenquelle 16 sind hinlänglich bekannt, so dass auf eine detaillierte Beschreibung verzichtet werden kann. Fig. 3 ist zu entnehmen, dass das Magnetron 16 im Wesentlichen eine Kathode 19, insbesondere eine Glühkathode, eine als Hohlraumresonator ausgebildete hohlzylinderförmige Anode 20, zwei axial zueinander beabstandete Ringmagnete 21 und eine Mikrowellenantenne 22 aufweist, von der die erzeugte Mikrowellenstrahlung 17 abgestrahlt wird. Für eine verbesserte Kühlung des Magnetrons 16 weist ein dieses aufnehmendes Gehäuse 23 ferner mehrere Kühlrippen 24 auf.

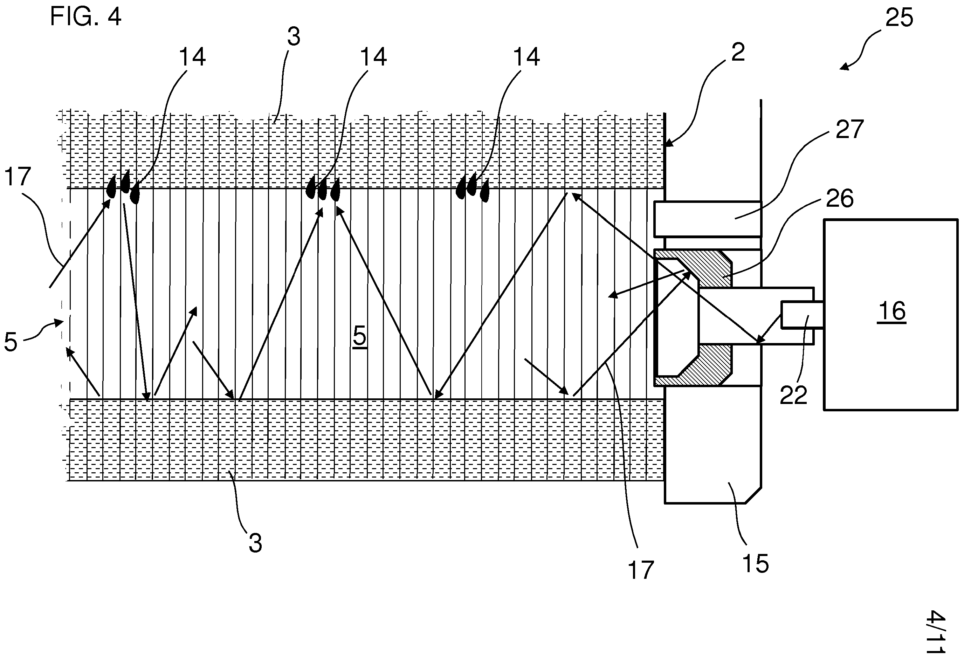

Fig. 4 stellt schematisch eine Längsschnittteilansicht eines weiteren Ausführungsbeispiels eines Brennstoffzellenstapels 25 gemäß der Erfindung entlang der in Fig. 1 gezeigten Schnittebene A-A dar. Im Unterschied zum Brennstoffzellenstapel 1 aus Fig. 3 weist der Brennstoffzellenstapel 25 einen Wellenleiter 26 auf, über welchen die Mikrowellenquelle 16 die Mikrowellenstrahlung 17 gezielter und effizienter in den Brennstoffaustrittskanal 5 abstrahlt. Außerdem ist bei dem Brennstoffzellenstapel 25 ein Temperatursensor 27 zur Erfassung der Temperatur im Brennstoffaustrittskanal 5 vorgesehen, so dass eine besonders effiziente Steuerung, das heißt eine Aktivierung und Deaktivierung, der Mikrowellenquelle 16 zur Erzeugung der Mikrowellenstrahlung 17 in Abhängigkeit von der mit dem Temperatursensor 27 gemessenen, augenblicklichen Temperatur des Brennstoffs im Brennstoffaustrittskanal 5 erfolgen kann.

Wie in Fig. 4 weiterhin dargestellt ist, wird die von der Antenne 21 abgestrahlte Mikrowellenstrahlung 17 ausgehend vom Wellenleiter 26 im Brennstoffaustrittskanal 5 vielfach reflektiert, insbesondere derart, dass sie jedenfalls auf in dem Brennstoffaustrittskanal 5 vorhandenes Wasser 14 (gefroren oder flüssig) trifft und dieses erwärmt. Hierbei wird gefrorenes Wasser 14 durch die Mikrowellenstrahlung 17 wenigstens soweit erwärmt, dass es schmilzt. Flüssiges Wasser 14 kann durch die Mikrowellenstrahlung 17 bei entsprechender Strahlungsleistung optional auch verdampft werden. Die in Fig. 4 dargestellten Wassertropfen 14 sollen sich im dargestellten Fall an den bereits in Fig. 2 gezeigten Brennstoffaustrittsbohrungen 10 befinden.

Vorzugsweise erzeugt die Mikrowellenquelle 16 eine Mikrowellenstrahlung 17 im Gigahertz-Bereich. Die erforderliche Grundfrequenz der Mikrowellenquelle 16 wird durch die konkreten Abmessungen und den Aufbau des Brennstoffzellenstapels 25 bzw. des Brennstoffaustrittskanals 5 bestimmt. Die Grundfrequenz wird durch entsprechende geometrische Ausgestaltung der Holraumresonatoren der Anode 20 im Magnetron eingestellt. Bei einer beispielhaften Kanalbreite von etwa 2,5 cm und einer Wellenlänge der Mikrowellenstrahlung von etwa 2 cm ergibt sich eine Grundfrequenz der Mikrowellenquelle 16 zu etwa 15 GHz.

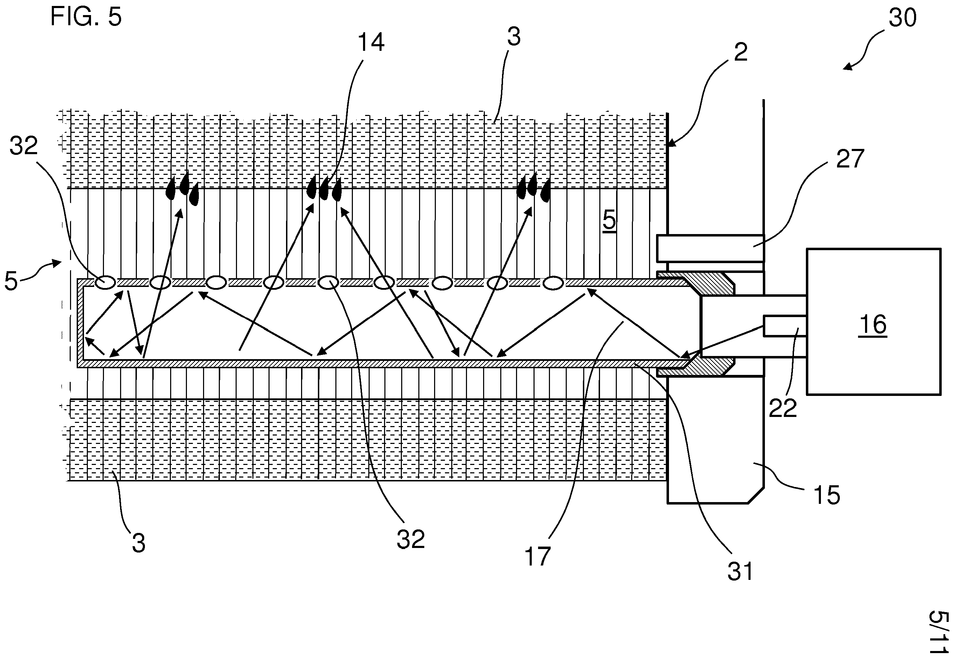

Fig. 5 stellt schematisch eine Längsschnittteilansicht eines weiteren Ausführungsbeispiels eines Brennstoffzellenstapels 30 gemäß der Erfindung entlang der in Fig. 1 gezeigten Schnittebene A-A dar. Der Brennstoffzellenstapel 30 weist im Gegensatz zum Brennstoffzellenstapel 25 aus Fig. 4 einen rohrförmigen Wellenleiter 31 auf, der sich in einen Großteil der Längserstreckung des Brennstoffaustrittskanals 5 hinein erstreckt. Wie Fig. 5 zu entnehmen ist, weist die das Wellenleiterrohr 31 bildende Umfangswand mehrere Öffnungen 32 auf. Wie in Fig. 5 zu erkennen ist, ermöglichen diese Öffnungen 32 ein ortsspezifisches Abstrahlen der Mikrowellenstrahlung 17 in den Brennstoffaustrittskanal 5, um auf diese Weise insbesondere ein gezieltes, effizientes Bestrahlen der Wassertropfen 14 zu erreichen. Die Öffnungen 32 sind hierzu an vorherbestimmten Stellen entlang des Wellenleiterrohrs 31 angeordnet.

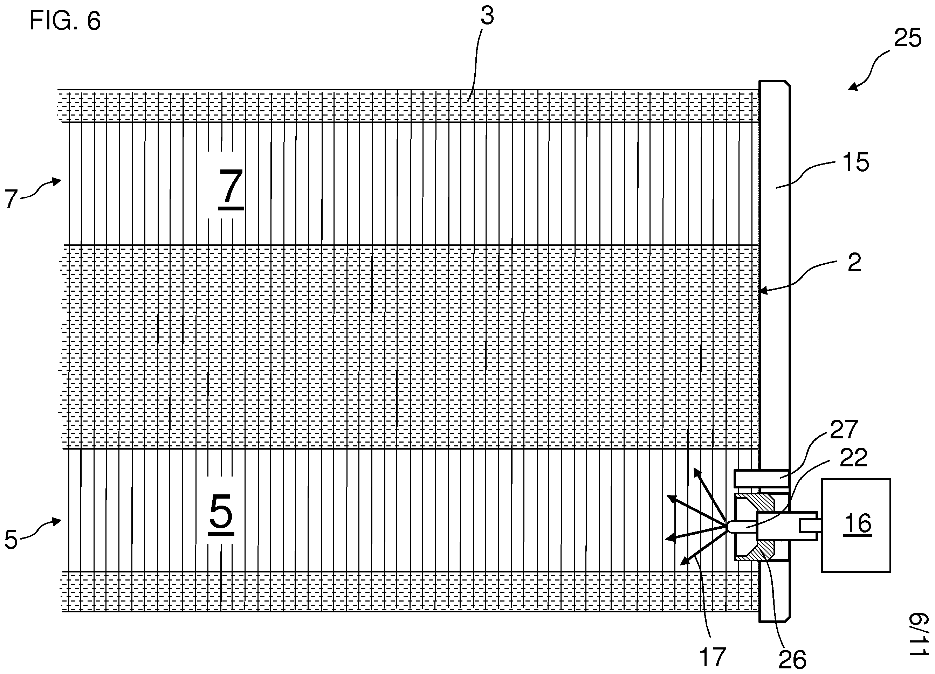

Fig. 6 stellt schematisch eine weitere, vergrößerte Längsschnittteilansicht des Brennstoffzellenstapels 25 aus Fig. 4 entlang der in Fig. 1 gezeigten Schnittebene A-A dar. Wie zu erkennen ist, weist der Brennstoffzellenstapel 25 lediglich eine Mikrowellenquelle 16 auf, die Mikrowellenstrahlung 17 lediglich in den Brennstoffaustrittskanal 5 abstrahlt. Für den Oxidationsmittelaustrittskanal 7 ist in diesem Ausführungsbeispiel des Brennstoffzellenstapels 25 keine Mikrowellenquelle 16 und keine Mikrowellenstrahlung 17 vorgesehen.

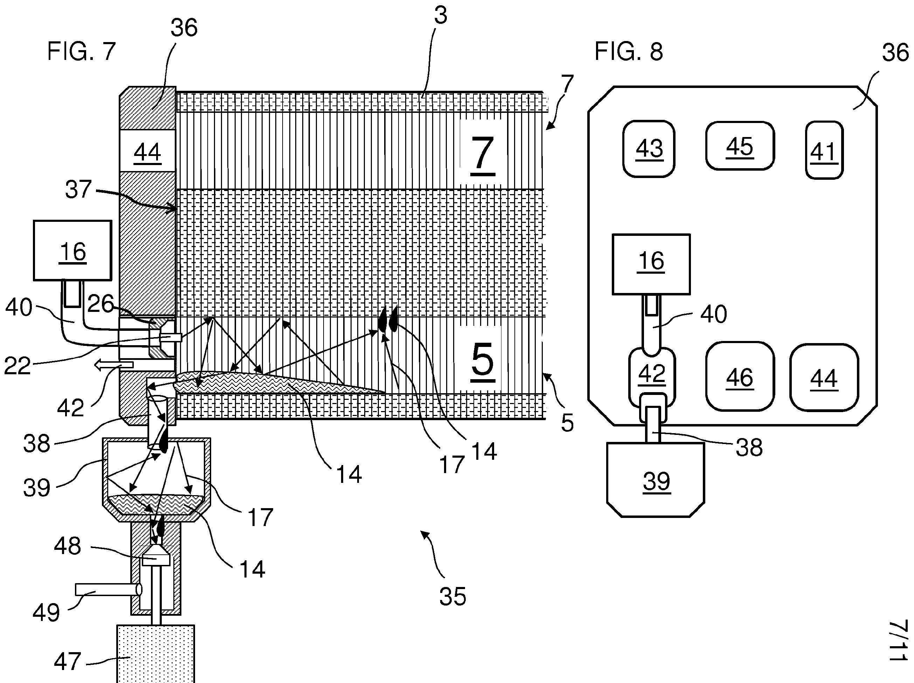

Fig. 7 stellt schematisch eine Längsschnittteilansicht eines noch weiteren Ausführungsbeispiels eines Brennstoffzellenstapels 35 gemäß der Erfindung entlang der in Fig. 1 gezeigten Schnittebene A-A dar. Bei dem Brennstoffzellenstapel 35 ist die Mikrowellenquelle 16 anders als bei den zuvor beschriebenen Brennstoffzellenstapeln 1, 25 und 30 an einer Endplatte 36 angebracht und gehalten, die die Einzelzellen 3 des Stapels 35 an einem freien Stapelende 37 abschließt, welches das dem freien Stapelende 2 (vgl. Fig. 3, 4, 5, 6) gegenüberliegende andere freie Stapelende der jeweiligen Brennstoffzellenstapel 1, 25, 30 und 35 ist. In Fig. 8 ist schematisch eine Draufsicht auf die Endplatte 36 des Brennstoffzellenstapels 35 aus Fig. 7 gezeigt.

Wie Fig. 7 zu entnehmen ist, weist die Endplatte 36 eine dem Brennstoffaustrittskanal 5 zugeordnete Wasserabflussbohrung 38 mit an dieser fluidleitend angeschlossenem Wasserauffangbehälter 39 auf. In Fig. 7 ist veranschaulicht, dass die von der Mikrowellenquelle 16 erzeugte Mikrowellenstrahlung 17 über einen gekrümmt verlaufenden Wellenleiter 40 und den Wellenleiter 26 derart in den Brennstoffaustrittskanal 5 abgestrahlt ist, dass sie neben dem im Brennstoffaustrittskanal 5 vorhandenen Wasser 14 (gefroren oder flüssig) ebenso die Wasserabflussbohrung 38 und den Wasserauffangbehälter 39 erreicht und dort ebenfalls vorhandenes Wasser 14 (gefroren oder flüssig) gleichermaßen wie vorstehend beschrieben erwärmt. Die Wasserabflussbohrung 38 und der Wasserauffangbehälter 39 dienen dem gezielten Ablassen bzw. Entfernen von im Brennstoffaustrittskanal 5 angesammeltem Wasser 14 und werden vorteilhaft für einen Spülvorgang (auch als "Purging" bezeichnet), vorliegend ein Brennstoffspülvorgang, des Brennstoffzellenstapels 35 verwendet.

Wie Fig. 8 deutlich zu entnehmen ist, weist die Endplatte 36 weiterhin eine dem Brennstoffeintrittskanal 4 (vgl. Fig. 1) zugeordnete Brennstoffeintrittsöffnung 41, eine dem Brennstoffaustrittskanal 5 zugeordnete Brennstoffaustrittsöffnung 42, eine dem Oxidationsmitteleintrittskanal 6 (vgl. Fig. 1) zugeordnete Oxidationsmitteleintrittsöffnung 43 sowie eine dem Oxidationsmittelaustrittskanal 7 zugeordnete Oxidationsmittelaustrittsöffnung 44 auf. Ferner sind in der Endplatte 36 noch eine Kühlmitteleintrittsöffnung 45 und eine Kühlmittelaustrittsöffnung 46 vorgesehen. Die jeweiligen Eintritts- und Austrittsöffnungen 41, 43, 45 und 42, 44, 46 dienen den entsprechenden Eintritts- und Austrittskanälen 4, 6, 8 und 5, 7, 9 (vgl. Fig. 1) zur Ein- bzw. Ausleitung der jeweiligen Fluide, nämlich Brennstoff, Oxidationsmittel und Kühlmittel. Die Endplatte 36 kann auch als (endseitige) Strömungsfeldplatte oder Medienverteilplatte (Media Distribution Plate, MDP) bezeichnet werden.

Das sich im Brennstoffaustrittskanal 5 sammelnde flüssige Wasser 14, von dem in Fig. 7 schematisch ebenfalls eine größere Menge angrenzend an die Wasserabflussbohrung 38 dargestellt ist, kann über die Wasserabflussbohrung 38 in den Wasserauffangbehälter 39 abfließen. Von dort wird es bei dem in Fig. 7 gezeigten Ausführungsbeispiel des Brennstoffzellenstapels 35 in vorherbestimmten Zeitabständen über eine entsprechende Drainageventilanordnung, die ein über ein Solenoid 47 steuerbares Drainageventil 48 und eine Drainageleitung 49 aufweist, abgelassen. Das Bestrahlen der Wasserabflussbohrung 38 mit der Mikrowellenstrahlung 17 verhindert wirksam eine Blockierung durch gefrorenes Wasser 14. Ebenso kann im Wasserauffangbehälter 39 gefrorenes Wasser 14 zum Beispiel nach einem Gefrierstart rasch aufgetaut und entsprechend zügig abgelassen werden.

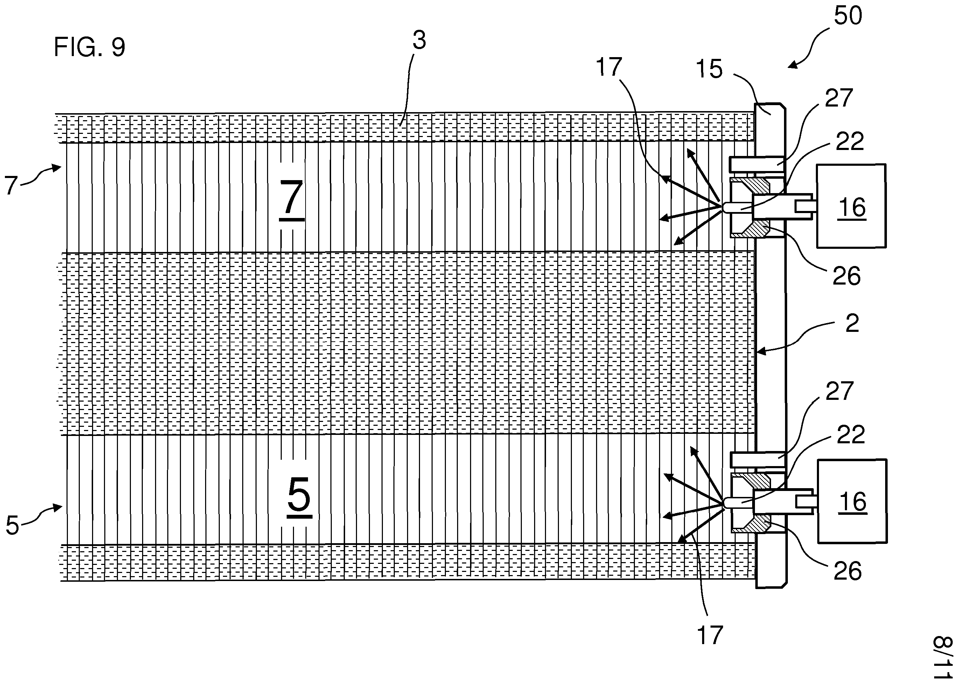

Fig. 9 stellt schematisch eine Längsschnittteilansicht eines noch weiteren Ausführungsbeispiels eines Brennstoffzellenstapels 50 gemäß der Erfindung entlang der in Fig. 1 gezeigten Schnittebene A-A dar. Wie zu erkennen ist, weist der Brennstoffzellenstapel 50 eine erste Mikrowellenquelle 16 zur Erzeugung und Abstrahlung von Mikrowellenstrahlung 17 in den gemeinsamen Brennstoffaustrittskanal 5 sowie eine zweite Mikrowellenquelle 16 zur Erzeugung und Abstrahlung von Mikrowellenstrahlung 17 in den gemeinsamen Oxidationsmittelaustrittskanal 7 auf.

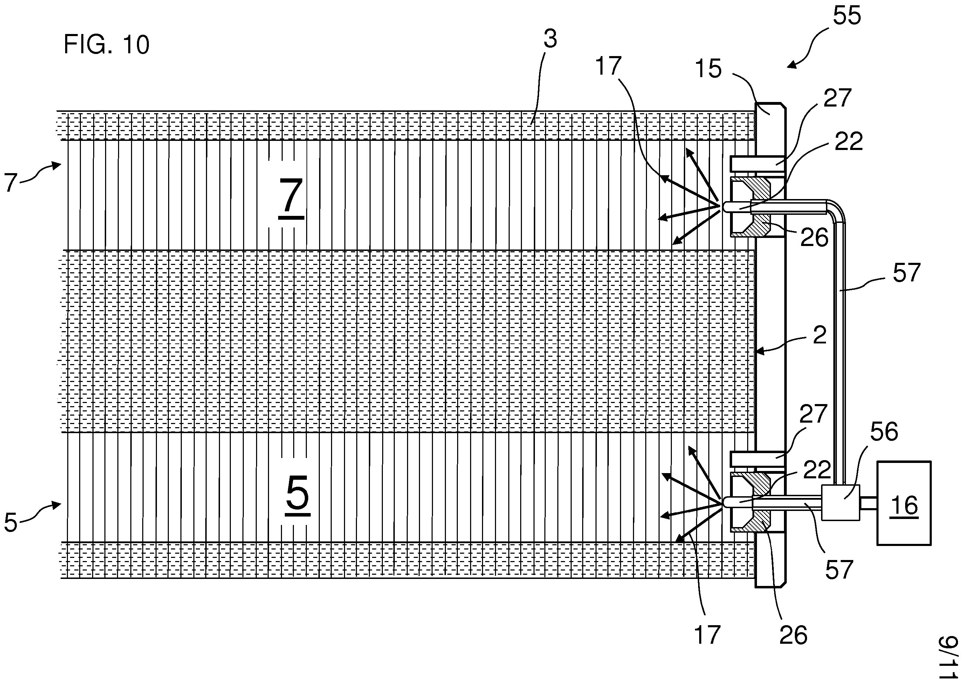

Fig. 10 stellt schematisch eine Längsschnittteilansicht eines noch weiteren Ausführungsbeispiels eines Brennstoffzellenstapels 55 gemäß der Erfindung entlang der in Fig. 1 gezeigten Schnittebene A-A dar. Der Brennstoffzellenstapel 55 weist eine einzige Mikrowellenquelle 16 zur Erzeugung und Abstrahlung von Mikrowellenstrahlung 17 auf, wobei die von der einzigen Mikrowellenquelle 16 erzeugte Mikrowellenstrahlung 17 vorliegend jedoch sowohl in den gemeinsamen Brennstoffaustrittskanal 5 als auch in den gemeinsamen Oxidationsmittelaustrittskanal 7 abgestrahlt wird. Hierzu wird die erzeugte Mikrowellenstrahlung 17 den jeweiligen Austrittskanälen 5 und 7 über eine an einem Mikrowellenstrahlteiler 56 verzweigte Mikrowellenantenne 57 bzw. einen verzweigten Zuführwellenleiter 57 zugeführt. Auf diese Weise wird mit nur einer einzigen Mikrowellenquelle 16 beiden Austrittskanälen 5 und 7 Mikrowellenstrahlung 17 zugeführt.

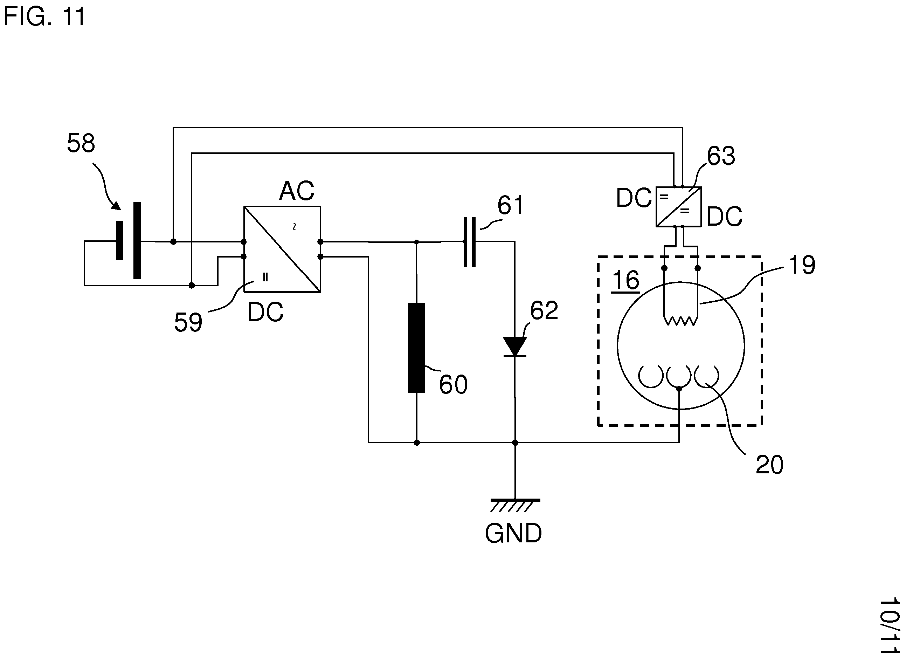

Fig. 11 stellt eine Schaltungsanordnung zur elektrischen Ansteuerung der Mikrowellenquelle 16 dar. Wie zu erkennen ist, wird vorliegend aus einer Hochspannungsbatterie 58, beispielsweise einer Traktionsbatterie eines nicht dargestellten elektromotorisch betreibbaren Kraftfahrzeugs, Gleichspannung (Hochspannung) entnommen und von einem DC/AC-Wandler 59 in eine AC-Wechselspannung umgewandelt, die wiederum einem im Wesentlichen aus einer Spule 60, einem Kondensator 61 und einer Diode 62 bestehenden Resonanzkreis zugeführt wird, der schließlich die Anode 20 der Mikrowellenquelle 16 speist. Die Funktionsweise eines derartigen Resonanzkreises ist allgemein bekannt und wird hier nicht näher erläutert.

Auf der anderen Seite wird die der Hochspannungsbatterie 58 entnommene DC-Hochspannung über einen DC/DC-Wandler 63 in eine kleinere Gleichspannung gewandelt und der Kathode bzw. Glühkathode 19 zugeführt.

Mit Hilfe der in Fig. 11 dargestellten Schaltung kann die Abgabeleistung der von der Mikrowellenquelle 16 erzeugten Mikrowellenstrahlung 17 kontinuierlich durch Steuern der Höhe der der Glühkathode 19 zugeführten Gleichspannung (hierin auch als Heizgleichspannung bezeichnet) und/oder durch Steuern der Höhe und/oder der Frequenz der der Anode 20 zugeführten Anodenwechselspannung gesteuert werden. Hierzu ist zweckmäßigerweise eine entsprechende elektronische Steuereinrichtung (nicht dargestellt) vorgesehen.

Alternativ zu der vorstehend beschriebenen kontinuierlichen Steuerung der Mikrowellenstrahlungsleistung kann die Leistung der von der Mikrowellenquelle 16 erzeugten Mikrowellenstrahlung 17 alternativ auch lediglich durch Ein- und Ausschalten der Mikrowellenquelle 16 gemäß einem vorherbestimmten Tastverhältnis gesteuert werden, das für eine stets fest vorgegebene Zeitdauer eine variable Dauer der Aktivierung und eine entsprechend variable Dauer der Deaktivierung der Mikrowellenquelle 16 festlegt ("Duty Cycle").

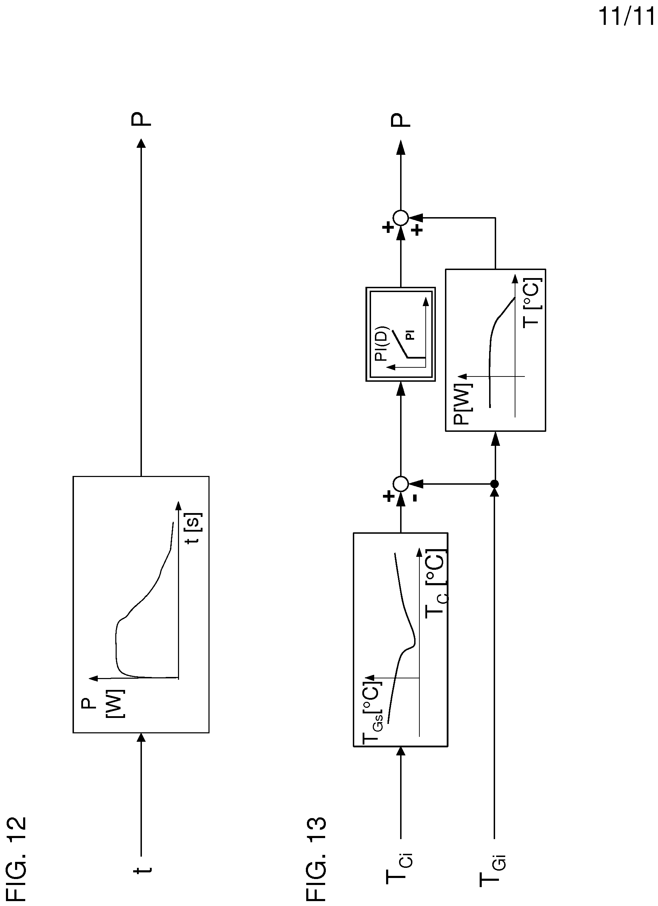

Fig. 12 stellt ein Blockdiagramm zur Veranschaulichung eines ersten Steuerungsverfahrens der Mikrowellenquelle 16 zur Erzeugung einer Mikrowellenstrahlung 17 mit gewünschter Strahlungsleistung dar. Es handelt sich hierbei um ein Steuerungsverfahren mit offenem Regelkreis ("open loop"), bei dem abhängig von einer Zeit t eine beispielsweise in einer Nachschlagtabelle einer elektronischen Steuereinrichtung gespeicherte, gewünschte Leistung P der Mikrowellenstrahlung 17 mit Hilfe eines der zuvor erläuterten zwei Verfahren zur Erzeugung der Mikrowellenstrahlung 17 an der Mikrowellenquelle 16 eingestellt wird.

Fig. 13 stellt ein Blockdiagramm zur Veranschaulichung eines zweiten Steuerungsverfahrens der Mikrowellenquelle 16 zur Erzeugung einer gewünschten Mikrowellenstrahlung 17 mit gewünschter Strahlungsleistung dar. Das dargestellte Steuerungsverfahren ist ein Steuerungsverfahren mit geschlossenem Regelkreis ("closed loop"), bei dem eine beispielsweise durch den Temperatursensor 27 (vgl. Fig. 4, 5, 6, 9, 10) gemessene Ist-Temperatur des Brennstoffs im Brennstoffaustrittskanal 5 und/oder des Oxidationsmittels im Oxidationsmittelaustrittskanal 7 im Regelkreis berücksichtigt, das heißt rückgekoppelt wird.

Nachdem die Mikrowellenquelle 16 aktiviert ist, wird kontinuierlich die mit dem Temperatursensor 27 ermittelte Ist-Temperatur T des Austrittsgases (Brennstoff und/oder Oxidationsmittel) im entsprechenden Austrittskanal 5 bzw. 7 erfasst. Basierend auf der ermittelten Austrittsgas-Ist-Temperatur T_{Gi} im entsprechenden Austrittskanal 5 bzw. 7 wird die an der Mikrowellenquelle 16 einzustellende Leistung P vorliegend mit Hilfe eines PI(D)-Reglers ermittelt (vgl. oberen Zweig des Blockdiagramms in Fig. 13). Eine Austrittsgas-Soll-Temperatur T_{Gs} kann zum Beispiel aus einer Kühlmittel-Ist-Temperatur T_{Ci} bestimmt werden.

Das Temperatur-Soll-Fenster kann hierbei zusätzlich variabel gehalten werden, um einen gewünschten Temperaturverlauf über die Zeit zu erhalten, indem entsprechende Temperatur-Leistungs-Werte P(T) vorab beispielsweise in einer Nachschlagtabelle einer elektronischen Steuereinrichtung gespeichert und dieser für die Leistungssteuerung entnommen werden (vgl. unteren Zweig des Blockdiagramms in Fig. 13).

Der hierin offenbarte erfindungsgemäße Brennstoffzellenstapel sowie das hierin offenbarte erfindungsgemäße Brennstoffzellen-Betriebsverfahren sind nicht auf die hierin jeweils offenbarten Ausführungsformen beschränkt, sondern umfassen auch gleich wirkende weitere Ausführungsformen, die sich aus technisch sinnvollen weiteren Kombinationen der hierin beschriebenen Merkmale sowohl der Vorrichtung als auch des Verfahrens ergeben. Insbesondere sind die vorstehend in der allgemeinen Beschreibung und der Figurenbeschreibung der vorliegenden Erfindung genannten und/oder in den Figuren alleine gezeigten Merkmale und Merkmalskombinationen nicht nur in den jeweils hierin explizit angegebenen Kombinationen, sondern auch in anderen Kombinationen oder in Alleinstellung verwendbar, ohne den Rahmen der vorliegenden Erfindung zu verlassen.

In besonders bevorzugter Ausführungsform werden sowohl der erfindungsgemäße Brennstoffzellenstapel als auch das erfindungsgemäße Betriebsverfahren zur elektrischen Energieversorgung in einem Kraftfahrzeug, beispielsweise einem ein- oder zweispurigen Kraftfahrzeug, insbesondere einem elektromotorisch betreibbaren Kraftfahrzeug zur Versorgung eines elektrischen Antriebsmotors, verwendet.

### Bezugszeichenliste

- 1: Brennstoffzellenstapel
- 2: Freies Stapelende
- 3: Einzelzelle
- 4: Brennstoffeintrittskanal
- 5: Brennstoffaustrittskanal
- 6: Oxidationsmitteleintrittskanal
- 7: Oxidationsmittelaustrittskanal
- 8: Kühlmitteleintrittskanal
- 9: Kühlmittelaustrittskanal
- 10: Brennstoffaustrittsbohrung
- 11: Oxidationsmittelaustrittsbohrung
- 12: Brennstoffeintrittsbohrung
- 13: Oxidationsmitteleintrittsbohrung
- 14: Wasser / Wassertropfen (gefroren oder flüssig)
- 15: Endplatte
- 16: Mikrowellenquelle
- 17: Mikrowellenstrahlung
- 18: Dichtungsring
- 19: Kathode / Glühkathode
- 20: Anode
- 21: Ringmagnet
- 22: Mikrowellenantenne
- 23: Gehäuse
- 24: Kühlrippen
- 25: Brennstoffzellenstapel
- 26: Wellenleiter
- 27: Temperatursensor
- 30: Brennstoffzellenstapel
- 31: Rohrförmiger Wellenleiter / Wellenleiterrohr
- 32: Wellenleiteröffnung
- 35: Brennstoffzellenstapel
- 36: Endplatte / Strömungsfeldplatte / Medienverteilplatte
- 37: Freies Stapelende
- 38: Wasserabflussbohrung
- 39: Wasserauffangbehälter
- 40: Wellenleiter
- 41: Brennstoffeintrittsöffnung
- 42: Brennstoffaustrittsöffnung
- 43: Oxidationsmitteleintrittsöffnung
- 44: Oxidationsmittelaustrittsöffnung
- 45: Kühlmitteleintrittsöffnung
- 46: Kühlmittelaustrittsöffnung
- 47: Solenoid
- 48: Drainageventil
- 49: Drainageleitung
- 50: Brennstoffzellenstapel
- 55: Brennstoffzellenstapel
- 56: Mikrowellenstrahlteiler
- 57: Verzweigte Mikrowellenantenne / Zuführwellenleiter
- 58: Hochspannungsbatterie
- 59: DC/AC-Wandler
- 60: Spule
- 61: Kondensator
- 62: Diode
- 63: DC/DC-Wandler
- AC: Wechselspannung
- DC: Gleichspannung
- GND: Elektrische Masse
- P: Leistung
- s: Sekunde
- t: Zeit
- T: Temperatur
- Tc: Kühlmitteltemperatur
- T_{Ci}: Kühlmittel-Ist-Temperatur
- T_{Gi}: Auslassgas-Ist-Temperatur
- T_{Gs}: Auslassgas-Soll-Temperatur
- W: Watt

## Patentansprüche

1. Brennstoffzellenstapel, aufweisend mehrere gestapelte Einzelzellen (3) mit jeweils einer Anode und einer Kathode, einen gemeinsamen Brennstoffeintrittskanal (4) und einen gemeinsamen Brennstoffaustrittskanal (5) sowie einen gemeinsamen Oxidationsmitteleintrittskanal (6) und einen gemeinsamen Oxidationsmittelaustrittskanal (7), wobei den Anoden der Einzelzellen (3) jeweils aus dem gemeinsamen Brennstoffeintrittskanal (4) Brennstoff zuführbar ist und in den gemeinsamen Brennstoffaustrittskanal (5) abführbar ist und wobei den Kathoden der Einzelzellen (3) jeweils aus dem gemeinsamen Oxidationsmitteleintrittskanal (6) Oxidationsmittel zuführbar ist und in den gemeinsamen Oxidationsmittelaustrittskanal (7) abführbar ist, wobei wenigstens eine Mikrowellenquelle (16) zur wahlweisen Erzeugung von Mikrowellenstrahlung (17) vorgesehen, angeordnet und eingerichtet ist, die erzeugte Mikrowellenstrahlung (17) in den gemeinsamen Brennstoffaustrittskanal (5) und/oder den gemeinsamen Oxidationsmittelaustrittskanal (7) derart abzustrahlen, dass dort vorhandenes gefrorenes Wasser (14) geschmolzen und/oder flüssiges Wasser (14) verdampft wird.

2. Brennstoffzellenstapel nach Anspruch 1,
**dadurch gekennzeichnet, dass**
mehrere Brennstoffaustrittsbohrungen (10) in dem gemeinsamen Brennstoffaustrittskanal (5) vorgesehen sind, über welche der Brennstoff von den Anoden der Einzelzellen (3) in den gemeinsamen Brennstoffaustrittskanal (5) abführbar ist, und/oder mehrere Oxidationsmittelaustrittsbohrungen (11) in dem gemeinsamen Oxidationsmittelaustrittskanal (7) vorgesehen sind, über welche das Oxidationsmittel von den Kathoden der Einzelzellen (3) in den gemeinsamen Oxidationsmittelaustrittskanal (7) abführbar ist, wobei die Mikrowellenstrahlung (17) derart in den gemeinsamen Brennstoffaustrittskanal (5) und/oder den gemeinsamen Oxidationsmittelaustrittskanal (7) abgestrahlt ist, dass sie die Brennstoffaustrittsbohrungen (10) und/oder die Oxidationsmittelaustrittsbohrungen (11) erreicht.

3. Brennstoffzellenstapel nach Anspruch 1 oder 2,
**dadurch gekennzeichnet, dass**
ein Wellenleiter (26, 31) vorgesehen ist, über welchen die Mikrowellenquelle (16) die Mikrowellenstrahlung (17) in den gemeinsamen Brennstoffaustrittskanal (5) und/oder den gemeinsamen Oxidationsmittelaustrittskanal (7) abstrahlt.

4. Brennstoffzellenstapel nach dem vorhergehenden Anspruch,
**dadurch gekennzeichnet, dass**
der Wellenleiter (31) rohrförmig ausgebildet ist und sich wenigstens in einen Teil des Brennstoffaustrittskanals (5) und/oder des Oxidationsmittelaustrittskanals (7) hinein erstreckt, wobei eine Umfangswand des Wellenleiters (31) wenigstens eine Öffnung (32) zum ortsspezifischen Abstrahlen der Mikrowellenstrahlung (17) in den Brennstoffaustrittskanal (5) und/oder den Oxidationsmittelaustrittskanal (7) aufweist.

5. Brennstoffzellenstapel nach einem der vorhergehenden Ansprüche,
**dadurch gekennzeichnet, dass**
die wenigstens eine Mikrowellenquelle (16) an einer die mehreren Einzelzellen (3) an einem freien Stapelende (2, 37) abschließenden Endplatte (15, 36) angebracht und gehalten ist.

6. Brennstoffzellenstapel nach dem vorhergehenden Anspruch,
**dadurch gekennzeichnet, dass**
die Endplatte (36) eine dem Brennstoffaustrittskanal (5) zugeordnete Wasserabflussbohrung (38) mit an dieser fluidleitend angeschlossenem Wasserauffangbehälter (39) aufweist, wobei die Mikrowellenstrahlung (17) derart in den Brennstoffaustrittskanal (5) abgestrahlt ist, dass sie die Wasserabflussbohrung (38) und/oder den Wasserauffangbehälter (39) erreicht.

7. Brennstoffzellenstapel nach einem der vorhergehenden Ansprüche,
**dadurch gekennzeichnet, dass**
eine erste Mikrowellenquelle (16) zur Erzeugung und Abstrahlung von Mikrowellenstrahlung (17) in den gemeinsamen Brennstoffaustrittskanal (5) vorgesehen ist und eine zweite Mikrowellenquelle (16) zur Erzeugung und Abstrahlung von Mikrowellenstrahlung (17) in den gemeinsamen Oxidationsmittelaustrittskanal (7) vorgesehen ist.

8. Brennstoffzellenstapel nach einem der vorhergehenden Ansprüche 1 bis 6,
**dadurch gekennzeichnet, dass**
eine einzige Mikrowellenquelle (16) zur Erzeugung und Abstrahlung von Mikrowellenstrahlung (17) sowohl in den gemeinsamen Brennstoffaustrittskanal (5) als auch in den gemeinsamen Oxidationsmittelaustrittskanal (7) vorgesehen ist, wobei die von der einzigen Mikrowellenquelle (16) erzeugte Mikrowellenstrahlung (17) den jeweiligen Austrittskanälen (5, 7) über eine verzweigte Mikrowellenantenne (57) und/oder einen verzweigten Zuführwellenleiter (57) zugeführt ist.

9. Verfahren zum Betreiben eines Brennstoffzellenstapels (1, 25, 30, 35, 50, 55), der mehrere gestapelte Einzelzellen (3) mit jeweils einer Anode und einer Kathode, einen gemeinsamen Brennstoffeintrittskanal (4) und einen gemeinsamen Brennstoffaustrittskanal (5) sowie einen gemeinsamen Oxidationsmitteleintrittskanal (6) und einen gemeinsamen Oxidationsmittelaustrittskanal (7) aufweist, wobei den Anoden der Einzelzellen (3) jeweils aus dem gemeinsamen Brennstoffeintrittskanal (4) Brennstoff zugeführt wird und in den gemeinsamen Brennstoffaustrittskanal (5) abgeführt wird und wobei den Kathoden der Einzelzellen (3) jeweils aus dem gemeinsamen Oxidationsmitteleintrittskanal (6) Oxidationsmittel zugeführt wird und in den gemeinsamen Oxidationsmittelaustrittskanal (7) abgeführt wird, wobei mittels wenigstens einer Mikrowellenquelle (16) wahlweise Mikrowellenstrahlung (17) erzeugt wird und diese in den gemeinsamen Brennstoffaustrittskanal (5) und/oder den gemeinsamen Oxidationsmittelaustrittskanal (7) derart abgestrahlt wird, dass dort vorhandenes gefrorenes Wasser (14) geschmolzen und/oder flüssiges Wasser (14) verdampft wird.

10. Verfahren nach dem vorhergehenden Anspruch,
**dadurch gekennzeichnet, dass**
die Mikrowellenstrahlung (17) während eines Gefrierstarts des Brennstoffzellenstapels (1, 25, 30, 35, 50, 55) erzeugt wird.

11. Verfahren nach einem der beiden vorhergehenden Ansprüche,
**dadurch gekennzeichnet, dass**
die Mikrowellenstrahlung (17) während eines Brennstoffspülvorgangs der Anoden und/oder eines Oxidationsmittelspülvorgangs der Kathoden erzeugt wird.

12. Verfahren nach einem der Ansprüche 9 bis 11,
**dadurch gekennzeichnet, dass**
die Mikrowellenstrahlung (17) während eines Warmlaufbetriebs und/oder eines Normalbetriebs des Brennstoffzellenstapels (1, 25, 30, 35, 50, 55) erzeugt wird, um durch Verdampfen von Wasser (14) die Befeuchtung des Brennstoffzellenstapels (1, 25, 30, 35, 50, 55) zu steuern.

13. Verfahren nach einem der Ansprüche 9 bis 12,
**dadurch gekennzeichnet, dass**
die Mikrowellenstrahlung (17) während einer Abschaltung des Brennstoffzellenstapels (1, 25, 30, 35, 50, 55) zum Verdampfen von Wasser (14) im Brennstoffzellenstapel (1, 25, 30, 35, 50, 55) erzeugt wird.

14. Verfahren nach einem der Ansprüche 9 bis 13,
**dadurch gekennzeichnet, dass**
die Abgabeleistung der von der Mikrowellenquelle (16) erzeugten Mikrowellenstrahlung (17) lediglich durch Ein- und Ausschalten der Mikrowellenquelle (16) gemäß einem vorherbestimmten Tastverhältnis gesteuert wird.

15. Verfahren nach einem der Ansprüche 9 bis 13,
**dadurch gekennzeichnet, dass**
die Abgabeleistung der von der Mikrowellenquelle (16) erzeugten Mikrowellenstrahlung (17) kontinuierlich durch Beaufschlagen einer Glühkathode (19) der Mikrowellenquelle (16) mit einer elektrischen Heizgleichspannung vorherbestimmbarer Höhe und/oder durch Beaufschlagen einer Anode (20) der Mikrowellenquelle (16) mit einer Anodenwechselspannung vorherbestimmbarer Höhe und/oder Frequenz gesteuert wird.

## Claims

1. Fuel cell stack that comprises multiple stacked individual cells (3) having respectively an anode and a cathode, a common fuel inlet duct (4) and a common fuel outlet duct (5) and also a common oxidizing agent inlet duct (6) and a common oxidizing agent outlet duct (7), wherein it is possible to supply the anodes of the individual cells (3) respectively with fuel from the common fuel inlet duct (4) and to discharge fuel into the common fuel outlet duct (5) and wherein it is possible to supply the cathodes of the individual cells (3) respectively with oxidizing agent from the common oxidizing agent inlet duct (6) and to discharge oxidizing agent into the common oxidizing agent outlet duct (7), wherein at least one microwave source (16) is provided for selectively generating microwave radiation (17), wherein said microwave source is arranged and configured so as to radiate the generated microwave radiation (17) into the common fuel outlet duct (5) and/or into the common oxidizing agent outlet duct (7) in such a manner that frozen water (14) that is present there is melted and/or liquid water (14) is evaporated.

2. Fuel cell stack according to Claim 1,
**characterized in that**
multiple fuel outlet bore holes (10) are provided in the common fuel outlet duct (5) via which the fuel may be discharged from the anodes of the individual cells (3) into the common fuel outlet duct (5), and/or multiple oxidizing agent outlet bore holes (11) are provided in the common oxidizing agent outlet duct (7) via which the oxidizing agent may be discharged from the cathodes of the individual cells (3) into the common oxidizing agent outlet duct (7), wherein the microwave radiation (17) is radiated into the common fuel outlet duct (5) and/or into the common oxidizing agent outlet duct (7) in such a manner that said microwave radiation arrives at the fuel outlet bore holes (10) and/or at the oxidizing agent outlet bore holes (11).

3. Fuel cell stack according to Claim 1 or 2,
**characterized in that**
a waveguide (26, 31) is provided via which the microwave source (16) radiates the microwave radiation (17) into the common fuel outlet duct (5) and/or into the common oxidizing agent outlet duct (7).

4. Fuel cell stack according to the preceding claim,
**characterized in that**
the waveguide (31) is configured in a tube-shaped manner and extends at least into part of the fuel outlet duct (5) and/or into part of the oxidizing agent outlet duct (7), wherein a peripheral wall of the waveguide (31) comprises at least one opening (32) for the site-specifically concentrated radiation of the microwave radiation (17) into the fuel outlet duct (5) and/or into the oxidizing agent outlet duct (7).

5. Fuel cell stack according to one of the preceding claims,
**characterized in that**
the at least one microwave source (16) is attached and retained on an end plate (15, 36) that closes off the multiple individual cells (3) on a free stack end (2, 37) .

6. Fuel cell stack according to the preceding claim,
**characterized in that**
the end plate (36) comprises a water drain bore hole (38) that is allocated to the fuel outlet duct (5) and has a water collection vessel (39) that is connected thereto in a fluid-conducting manner, wherein the microwave radiation (17) is radiated into the fuel outlet duct (5) in such a manner that said radiation arrives at the water drain bore hole (38) and/or at the water collection vessel (39).

7. Fuel cell stack according to one of the preceding claims,
**characterized in that**
a first microwave source (16) is provided for generating and radiating microwave radiation (17) into the common fuel outlet duct (5) and a second microwave source (16) is provided for generating and radiating microwave radiation (17) into the common oxidizing agent outlet duct (7).

8. Fuel cell stack according to one of the preceding Claims 1 to 6,
**characterized in that**
a single microwave source (16) is provided for generating and radiating microwave radiation (17) both into the common fuel outlet duct (5) and also into the common oxidizing agent outlet duct (7), wherein the microwave radiation (17) that is generated by the single microwave source (16) is supplied to the respective outlet ducts (5, 7) via a branched microwave antenna (57) and/or via a branched supply waveguide (57) .

9. Method for operating a fuel cell stack (1, 25, 30, 35, 50, 55) of the multiple stacked individual cells (3) having respectively an anode and a cathode, a common fuel inlet duct (4) and a common fuel outlet duct (5) and also a common oxidizing agent inlet duct (6) and a common oxidizing agent outlet duct (7), wherein it is possible to supply the anodes of the individual cells (3) respectively with fuel from the common fuel inlet duct (4) and to discharge fuel into the common fuel outlet duct (5) and wherein it is possible to supply the cathodes of the individual cells (3) respectively with oxidizing agent from the common oxidizing agent inlet duct (6) and to discharge oxidizing agent into the common oxidizing agent outlet duct (7), wherein by means of at least one microwave source (16) microwave radiation (17) is selectively generated and said generated microwave radiation (17) is radiated into the common fuel outlet duct (5) and/or into the common oxidizing agent outlet duct (7) in such a manner that frozen water (14) that is present there is melted and/or liquid water (14) is evaporated.

10. Method according to the preceding claim,
**characterized in that**
the microwave radiation (17) is generated during a start-up procedure under freezing conditions of the fuel cell stack (1, 25, 30, 35, 50, 55).

11. Method according to one of the two preceding claims,
**characterized in that**
the microwave radiation (17) is generated during a procedure of flushing fuel out of the anodes and/or during a procedure of flushing oxidizing agent out of the cathodes.

12. Method according to one of Claims 9 to 11,
**characterized in that**
the microwave radiation (17) is generated during a warm running operation and/or during a normal operation of the fuel cell stack (1, 25, 30, 35, 50, 55) in order to control the moistening of the fuel cell stack (1, 25, 30, 35, 50, 55) by means of evaporating water (14).

13. Method according to one of Claims 9 to 12,
**characterized in that**
the microwave radiation (17) is generated during a switch-off procedure of the fuel cell stack (1, 25, 30, 35, 50, 55) so as to evaporate water (14) in the fuel cell stack (1, 25, 30, 35, 50, 55).

14. Method according to one of Claims 9 to 13,
**characterized in that**
the output power of the microwave radiation (17) that is generated by the microwave source (16) is controlled merely by switching the microwave source (16) on and off in accordance with a predetermined duty cycle.

15. Method according to one of Claims 9 to 13,
**characterized in that**
the power output of the microwave radiation (17) that is generated by the microwave source (16) is controlled continuously by influencing a hot cathode (19) of the microwave source (16) with an electrical heating DC voltage of a predeterminable magnitude and/or by influencing an anode (20) of the microwave source (16) with an anode AC alternating voltage of a predeterminable magnitude and/or with a predeterminable frequency.

## Revendications

1. Empilement de piles à combustible, comportant plusieurs cellules individuelles (3) empilées avec respectivement une anode et une cathode et comportant également un canal d'entrée de combustible (4) commun et un canal de sortie de combustible (5) commun ainsi qu'un canal d'entrée d'oxydant (6) commun et un canal de sortie d'oxydant (7) commun, le combustible pouvant être amené aux anodes des cellules individuelles (3) respectivement à partir du canal d'entrée de combustible (4) commun et être évacué dans le canal de sortie de combustible (5) commun et l'oxydant pouvant être amené aux cathodes des cellules individuelles (3) respectivement à partir du canal d'entrée d'oxydant (6) commun et être évacué dans le canal de sortie d'oxydant (7) commun, au moins une source de micro-ondes (16) étant prévue, agencée et installée pour la production optionnelle de rayonnement micro-ondes (17), ladite source envoyant le rayonnement micro-ondes (17) produit dans le canal de sortie de combustible (5) commun et/ou dans le canal de sortie d'oxydant (7) commun de telle sorte que l'eau (14) gelée à cet endroit fonde et/ou que l'eau (14) fluide s'évapore.

2. Empilement de piles à combustible selon la revendication 1, **caractérisé en ce que** plusieurs alésages de sortie de combustible (10) sont prévus dans le canal de sortie de combustible (5) commun via lesquels le combustible peut être évacué depuis les anodes des cellules individuelles (3) jusque dans le canal de sortie de combustible (5) commun et/ou **en ce que** plusieurs alésages de sortie d'oxydant (11) sont prévus dans le canal de sortie d'oxydant (7) commun via lesquels l'oxydant peut être évacué depuis les cathodes des cellules individuelles (3) jusque dans le canal de sortie d'oxydant (7) commun, le rayonnement micro-ondes (17) étant envoyé de telle sorte dans le canal de sortie de combustible (5) commun et/ou dans le canal de sortie d'oxydant (7) commun qu'il atteint les alésages de sortie de combustible (10) et/ou les alésages de sortie d'oxydant (11).

3. Empilement de piles à combustible selon la revendication 1 ou 2, **caractérisé en ce qu'**un conducteur d'ondes (26, 31) est prévu via lequel la source de micro-ondes (16) envoie le rayonnement micro-ondes (17) dans le canal de sortie de combustible (5) commun et/ou dans le canal de sortie d'oxydant (7) commun.

4. Empilement de piles à combustible selon la revendication précédente, **caractérisé en ce que** le conducteur d'ondes (31) est réalisé en forme de tube et s'étend au moins jusque dans une partie du canal de sortie de combustible (5) et/ou du canal de sortie d'oxydant (7), une paroi périphérique du conducteur d'ondes (31) comportant au moins une ouverture (32) pour envoyer de façon spécifique le rayonnement micro-ondes (17) dans le canal de sortie de combustible (5) et/ou dans le canal de sortie d'oxydant (7).

5. Empilement de piles à combustible selon l'une quelconque des revendications précédentes, **caractérisé en ce que** l'au moins une source de micro-ondes (16) est placée et maintenue au niveau d'une plaque d'extrémité (15, 36) fermant les multiples cellules individuelles (3) au niveau d'une extrémité libre de l'empilement (2, 37) .

6. Empilement de piles à combustible selon la revendication précédente, **caractérisé en ce que** la plaque d'extrémité (36) comporte un alésage d'écoulement d'eau (38) associé au canal de sortie de combustible (5) avec un bac de collecte d'eau (39) raccordé de façon à conduire le fluide au niveau dudit canal, le rayonnement micro-ondes (17) étant envoyé de telle sorte dans le canal de sortie de combustible (5) qu'il atteint l'alésage d'écoulement d'eau (38) et/ou le bac de collecte d'eau (39).

7. Empilement de piles à combustible selon l'une quelconque des revendications précédentes, **caractérisé en ce qu'**une première source de micro-ondes (16) est prévue pour produire et envoyer un rayonnement micro-ondes (17) dans le canal de sortie de combustible (5) commun et qu'une deuxième source de micro-ondes (16) est prévue pour produire et envoyer un rayonnement micro-ondes (17) dans le canal de sortie d'oxydant (7) commun.

8. Empilement de piles à combustible selon l'une quelconque des revendications 1 à 6 précédentes, **caractérisé en ce qu'**une seule source de micro-ondes (16) est prévue pour produire et envoyer le rayonnement micro-ondes (17) tant dans le canal de sortie de combustible (5) commun que dans le canal de sortie d'oxydant (7) commun, le rayonnement micro-ondes (17) produit par la seule source de micro-ondes (16) étant amené aux canaux de sortie (5, 7) respectifs via une antenne micro-ondes (57) ramifiée et/ou un conducteur d'ondes d'amenée (57) ramifié.

9. Procédé de fonctionnement d'un empilement de piles à combustible (1, 25, 30, 35, 50, 55) comprenant plusieurs cellules individuelles (3) empilées avec respectivement une anode et une cathode et comprenant un canal d'entrée de combustible (4) commun et un canal de sortie de combustible (5) commun ainsi qu'un canal d'entrée d'oxydant (6) commun et un canal de sortie d'oxydant (7) commun, le combustible étant respectivement amené aux anodes des cellules individuelles (3) à partir du canal d'entrée de combustible (4) commun et étant évacué dans le canal de sortie de combustible (5) commun et l'oxydant étant respectivement amené aux cathodes des cellules individuelles (3) à partir du canal d'entrée d'oxydant (6) commun et évacué dans le canal de sortie d'oxydant (7) commun, un rayonnement micro-ondes (17) étant produit en option à l'aide d'au moins une source de micro-ondes (16) et ce rayonnement étant envoyé de telle sorte dans le canal de sortie de combustible (5) commun et/ou dans le canal de sortie d'oxydant (7) commun que l'eau (14) gelée présente à cet endroit est fondue et/ou l'eau fluide (14) est évaporée.

10. Procédé selon la revendication précédente, **caractérisé en ce que** le rayonnement micro-ondes (17) est produit pendant un début de gel de l'empilement de piles à combustible (1, 25, 30, 35, 50, 55).

11. Procédé selon l'une quelconque des deux revendications précédentes, **caractérisé en ce que** le rayonnement micro-ondes (17) est produit pendant un processus de vidage de combustible des anodes et/ou pendant un processus de vidage d'oxydant des cathodes.

12. Procédé selon l'une quelconque des revendications 9 à 11, **caractérisé en ce que** le rayonnement micro-ondes (17) est produit pendant un fonctionnement de circulation de chaleur et/ou pendant le fonctionnement de l'empilement de piles à combustible (1, 25, 30, 35, 50, 55) de façon à commander l'humidification de l'empilement de piles à combustible (1, 25, 30, 35, 50, 55) par évaporation de l'eau (14).

13. Procédé selon l'une quelconque des revendications 9 à 12, **caractérisé en ce que** le rayonnement micro-ondes (17) est produit pendant une déconnexion de l'empilement de piles à combustible (1, 25, 30, 35, 50, 55) de façon à évaporer l'eau (14) contenue dans l'empilement de piles à combustible (1, 25, 30, 35, 50, 55) .

14. Procédé selon l'une quelconque des revendications 9 à 13, **caractérisé en ce que** la puissance de sortie du rayonnement micro-ondes (17) produit par la source de micro-ondes (16) est seulement commandée par connexion et déconnexion de la source de micro-ondes (16) selon un rapport impulsion/pause prédéterminé.

15. Procédé selon l'une quelconque des revendications 9 à 13, **caractérisé en ce que** la puissance de sortie du rayonnement micro-ondes (17) produit par la source de micro-ondes (16) est commandée en continu par sollicitation d'une cathode chaude (19) de la source de micro-ondes (16) avec une tension continue de chauffage électrique de hauteur prédéfinissable et/ou par sollicitation d'une anode (20) de la source de micro-ondes (16) avec une tension alternative d'anode de hauteur et/ou de fréquence prédéfinissables.
